# EUROPEAN PATENT SPECIFICATION

(11) **EP 2 555 306 B1**
(45) Date of publication and mention of the grant of the patent: **28.09.2016**
(21) Application number: 11762537.6
(22) Date of filing: 10.03.2011
(51) Int. Cl.: H01M 4/131, H01M 4/133, H01M 4/62, H01M 4/58, H01M 4/587, H01M 10/0525

(54) **LITHIUM-ION SECONDARY BATTERY**
LITHIUM-IONEN-AKKUMULATOR
BATTERIE RECHARGEABLE AU LITHIUM-ION

(30) Priority: 29.03.2010 JP 2010076285
(43) Date of publication of application: 06.02.2013
(73) Proprietor: Zeon Corporation, Tokyo 100-8246 (JP)
(72) Inventor: SASAKI, Tomokazu, Tokyo 100-8246 (JP); KOBAYASHI, Kei, Tokyo 100-8246 (JP)
(74) Representative: Vossius & Partner Patentanwälte Rechtsanwälte mbB
(86) International application number: PCT/JP2011/055708
(87) International publication number: WO 2011/122297

(56) References cited:
- EP-A1- 1 244 158
- JP-A- 8 250 122
- JP-A- 9 320 604
- JP-A- 2001 256 981
- JP-A- 2003 317 721
- JP-A- 2004 227 974
- JP-A- 2005 063 846
- US-A1- 2009 053 603

## Description

### Field

The present invention relates to a lithium ion secondary battery.

### Background

Lithium ion secondary batteries are expected to be used for applications as an electric power supply for a compact apparatus such as a mobile phone and a notebook-type personal computer and an electric power supply for an electric automobile, taking advantage of their relatively high energy density. In order to improve the performance of these devices, further improvement in the performance of the lithium ion secondary battery is also being demanded.

For such improvement, for example, attempts to achieve an increase in lifetime and output have been made by using a specific binder and using a certain substance as an active material (see Patent Literatures 1 and 2).

### Citation List

### Patent Literature

Patent Literature 1: Japanese Patent Application Laid-Open No. 2009-158099 A (corresponding U.S. Patent Publication: U.S. Patent Application Publication No. 2009/162751)
Patent Literature 2: International application WO2007/122947 (corresponding U.S. Patent Publication: U.S. Patent Application Publication No. 2009/274958)

JP 2005 063846 discloses a lithium ion secondary battery where the negative electrode active material includes a carbonaceous active material and where the negative electrode binder is a polymer obtained by polymerization of a monomer containing a styrene monomer and an acrylic acid monomer.

### Summary

### Technical Problem

In order to further improve the performance of the devices using the lithium ion secondary battery, the lithium ion secondary battery is also desired to have still higher performance. For example, it is desired to develop a lithium ion secondary battery that maintains a high capacity even when charging and discharging are performed in a rapid manner, and when charging and discharging are performed in a low temperature environment. It is also desired to develop a lithium ion secondary battery in which occurrence of short circuit is further suppressed.

An object of the present invention is to provide a lithium ion secondary battery which has a high capacity, can maintain a high capacity even when charging and discharging are performed in a rapid manner and when charging and discharging are performed in a low temperature environment, and also has high safety.

### Solution to Problem

In order to solve the aforementioned problems, the inventors of the present invention have conducted studies and found out that an excellent lithium ion secondary battery can be obtained when certain compositions are selected as a composition for a positive electrode active material layer and a negative electrode active material layer which constitute a lithium ion secondary battery. In particular, the inventors have found out that, when a specific combination of a positive electrode active material, a negative electrode active material and binders therefor is used, and particularly when a certain monomer composition is selected as a raw material for polymers of the binders, excellent effects can be obtained. For example, thereby lithium ion conductivity can be improved, adhesion property between a collector and an active material layer can be improved, and an aqueous medium can be used in the preparation of the binders whereby deformation of a cell caused by generation of a decomposed gas from a residual organic solvent during the use of the battery can be avoided. The present invention is on the basis of the aforementioned findings.

Accordingly, according to the present invention, the following is provided.
(1) A lithium ion secondary battery comprising: a negative electrode having a negative electrode active material layer containing a negative electrode active material and a negative electrode binder; a positive electrode having a positive electrode active material layer containing a positive electrode active material and a positive electrode binder; an electrolyte solution; and a separator, wherein:
   the negative electrode active material includes a carbonaceous active material;
   the negative electrode binder is a polymer obtained by polymerization of a monomer composition for a negative electrode, the monomer composition for a negative electrode containing 70 to 90 parts by weight of a styrene monomer and 1 to 5 parts by weight of an ethylenically unsaturated carboxylic acid monomer relative to 100 parts by weight of the monomer composition;
   in the negative electrode active material layer, a ratio of the negative electrode binder is 0.1 to 5 parts by weight relative to 100 parts by weight of the negative electrode active material;
   the positive electrode active material contains one or more species of transition metal elements selected from the group consisting of manganese, iron, nickel, and combinations thereof;
   in the positive electrode active material layer, a ratio of the positive electrode binder is 0.1 to 5 parts by weight relative to 100 parts by weight of the positive electrode active material;
   the positive electrode binder is a polymer obtained by polymerization of a monomer composition for a positive electrode, the monomer composition for a positive electrode containing 10 to 35 parts by weight of an acrylonitrile monomer and 1 to 10 parts by weight of an ethylenically unsaturated carboxylic acid monomer relative to 100 parts by weight of the monomer composition; and
   the positive electrode binder is a polymer having a swelling degree against the electrolyte solution of 2.0 to 15.0 times.
(2) The lithium ion secondary battery according to (1), wherein: the negative electrode binder is a polymer obtained by polymerization in an aqueous medium;
   the negative electrode active material layer contains a preservative in a ratio of 0.001 to 0.1 parts by weight relative to 100 parts by weight of the monomer composition;
   the positive electrode binder is a polymer obtained by polymerization in an aqueous medium; and
   the positive electrode active material layer contains a preservative in a ratio of 0.001 to 0.1 parts by weight relative to 100 parts by weight of the monomer composition.
(3) The lithium ion secondary battery according to (1) or (2), wherein the separator has a porous film containing non-electroconductive particles.
(4) The lithium ion secondary battery according to any one of (1) to (3), wherein the monomer composition for a negative electrode is a composition further containing a conjugate diene monomer in a ratio of 0.1 to 25 parts by weight relative to 100 parts by weight of the monomer composition.
(5) The lithium ion secondary battery according to any one of (1) to (4), wherein the carbonaceous active material of the negative electrode contains a carbon material having a distance between graphite layers of 0.340 to 0.370 nm.
(6) The lithium ion secondary battery according to any one of (1) to (5), wherein the positive electrode active material is olivine iron.
(7) The lithium ion secondary battery according to any one of (1) to (6), wherein the negative electrode, the positive electrode, or both electrodes have a collector and an electroconductive adhesive layer which is interposed between the negative electrode active material layer and the collector, between the positive electrode active material layer and the collector, or both of them.
(8) The lithium ion secondary battery according to any one of (1) to (7), wherein the battery has a multilayer structure.

### Advantageous Effects of Invention

The lithium ion secondary battery of the present invention has high capacity, can maintain high capacity even when charging and discharging are performed in a rapid manner and when charging and discharging are performed in a low temperature environment, and also has high safety. Therefore, the lithium ion secondary battery can be advantageously used as an electric power supply for a compact devices such as a mobile phone and a notebook-type personal computer and an electric power supply for a large apparatus such as an electric automobile.

### Description of Embodiments

The lithium ion secondary battery of the present invention comprises a negative electrode having a negative electrode active material layer, a positive electrode having a positive electrode active material layer, an electrolyte solution, and a separator. The negative electrode active material layer is a layer containing a negative electrode active material and a negative electrode binder, and the positive electrode active material layer is a layer containing a positive electrode active material and a positive electrode binder. In the present invention, the positive electrode active material layer and the negative electrode active material layer are layers having a predetermined composition, whereby favorable charging and discharging properties and high safety can be realized.

### [1. Negative electrode active material]

In the present invention, the negative electrode active material constituting the negative electrode active material layer is a carbonaceous active material.

The term "carbonaceous active material" refers to a negative electrode active material having carbon atoms as a main skeleton which can dope and dedope a lithium ion. Specific examples of the carbonaceous active material may include a carbonaceous material and a graphite material.

In general, the carbonaceous material is a carbonaceous material which is obtained by heat-treating (carbonizing) a carbon precursor at 2,000°C or lower and which has a low degree of graphitization (low crystallinity), whereas the graphite material is a material having a high degree of crystallinity close to that of graphite which is obtained by subjecting easily-graphitizable carbon to heat treatment at 2,000°C or higher. The lower limit of heat treatment temperature for the carbonaceous material is not particularly limited, and may be 500°C or higher. The upper limit of heat treatment temperature for the graphite material is not particularly limited, and may be 1,500°C or lower.

Examples of the carbonaceous material may include easily-graphitizable carbon whose carbon structure readily alters depending on the heat treatment temperature, and non easily-graphitizable carbon typified by glassy carbon having a structure similar to an amorphous structure.

Examples of easily-graphitizable carbon may include carbon materials obtained using as a raw material tar pitch obtained from petroleum or coal. Examples of which may include cokes, meso carbon micro beads (MCMBs), mesophase pitch-based carbon fibers, and thermal decomposition vapor-phase growth carbon fibers. MCMB are carbon fine particles obtained by separating and extracting mesophase microspheres that have been formed in the course of heating pitches at about 400°C. The mesophase pitch-based carbon fibers are carbon fibers obtained using as a raw material the mesophase pitch that has been obtained by growth and coalescence of the mesophase microspheres.

Examples of the non easily-graphitizable carbon may include a phenolic resin calcined product, a polyacrylonitrile-based carbon fiber, quasi-isotropic carbon, and a furfuryl alcohol resin fired product (PFA).

It is preferable that the carbonaceous active material for use in the present invention has a distance between graphite layers (interval of (002) planes (d value) measured by the X-ray diffraction method) of 0.340 to 0.370 nm, more preferably 0.345 to 0.365 nm, and further preferably 0.350 to 0.360 nm. When such a carbonaceous active material that is so-called soft carbon is used, a lithium ion secondary battery having excellent output property can be obtained without significant decrease in its capacity per volume.

The carbonaceous active material existing in the negative electrode active material layer may be in a particle shape.

It is preferable that the specific surface area of the carbonaceous active material for use in the present invention falls within a range of 0.1 to 20 m²/g, and more preferably within a range of 0.5 to 10 m²/g. When the specific surface area of the carbonaceous active material as a negative electrode active material falls within this range, the amount of a binder for preparing a slurry composition, which will be described later, can be reduced, and a reduction of the battery capacity can be prevented. In addition, the viscosity of the slurry composition, which will be described later, can be easily adjusted to a suitable degree for application.

The particle diameter of the carbonaceous active material in the negative electrode active material layer is usually 1 to 50 µm, and preferably 2 to 30 µm. When the particle diameter of the carbonaceous active material as the negative electrode active material falls within the range, the amount of the binder for preparing the slurry composition, which will be described later, can be reduced, and a reduction of the battery capacity can be prevented. In addition, the viscosity of the slurry composition can be easily adjusted to a suitable degree for application.

### [2. Negative electrode binder; monomer composition]

In the present invention, the negative electrode binder constituting the negative electrode active material layer is obtained by polymerization of a monomer composition for a negative electrode containing a styrene monomer and an ethylenically unsaturated carboxylic acid monomer in a predetermined ratio.

In the present invention, the term "monomer composition" regarding the polymerization for obtaining binders for negative electrode and positive electrode refers only to monomers having a structure involved in a polymerization reaction. In a polymerization reaction system, other substances (for example, a solvent, a polymerization initiator, and other additives in a reaction system during the polymerization) may exist in addition to the monomer composition. These substances other than the monomer composition are not included in the total amount of "monomer composition" in the calculation of ratio of each monomer.

The ratio of the styrene monomer in the monomer composition for a negative electrode is 70 to 90 parts by weight, preferably 70 to 88 parts by weight, and more preferably 72 to 88 parts by weight relative to 100 parts by weight of the monomer composition for a negative electrode.

Examples of the ethylenically unsaturated carboxylic acid monomer in the monomer composition for a negative electrode may include compounds such as acrylic acid, methacrylic acid, itaconic acid, and fumaric acid. The containing ratio of the ethylenically unsaturated carboxylic acid monomer in the monomer composition for a negative electrode is 1 to 5 parts by weight, and preferably 1 to 4 parts by weight relative to 100 parts by weight of the monomer composition for a negative electrode.

When the monomer composition for a negative electrode contains the styrene monomer and the ethylenically unsaturated carboxylic acid monomer in the aforementioned predetermined ratio, a lithium ion secondary battery which has a high capacity, can maintain a high capacity even when charging and discharging are performed in a rapid manner and when charging and discharging are performed in a low temperature environment, and has high safety can be obtained. In particular, by having a high styrene monomer content of 70 parts by weight or more, the ion conductivity can be set to a high value, and the properties of capacity and of charging and discharging can be improved. Further, employment of the monomer composition for a negative electrode containing the styrene monomer and the ethylenically unsaturated carboxylic acid monomer in the aforementioned predetermined ratio enables employment of an aqueous medium in the preparation of a binder. As a result, deformation of a cell caused by generation of a decomposed gas from a residual organic solvent during the use of a battery can be avoided.

If necessary, the monomer composition for a negative electrode may contain another optional monomer, in addition to the styrene monomer and the ethylenically unsaturated carboxylic acid monomer. Examples of such optional monomers may preferably include a conjugated diene monomer. Examples of such a conjugated diene monomer may include compounds such as 1,3-butadiene and isoprene. The ratio of the conjugated diene monomer in the monomer composition for a negative electrode is preferably 0.1 to 25 parts by weight, more preferably 5 to 25 parts by weight, and still more preferably 10 to 25 parts by weight relative to 100 parts by weight of the monomer composition for a negative electrode. When the ratio of the conjugated diene monomer is not more than the aforementioned upper limit, the ion conductivity can be kept in a high range and the output property can be improved. On the other hand, when the ratio of the conjugated diene monomer is not less than the aforementioned lower limit, flexibility of a negative electrode can be maintained, and the occurrence of short circuit can be prevented.

### [3. Negative electrode binder; preparation method]

The method for polymerizing the monomer composition for a negative electrode to prepare the negative electrode binder is not particularly limited, and any method such as a solution polymerization method, a suspension polymerization method, a bulk polymerization method, and an emulsion polymerization method may be used. The polymerization reaction may be in any style such as ion polymerization, radical polymerization, and living radical polymerization.

It is preferable to achieve the polymerization for obtaining the negative electrode binder by polymerization in an aqueous medium. In the present invention, when the composition containing the aforementioned contents is used as the monomer composition for a negative electrode, the resulting polymer favorably functions as a binder even when the polymerization is performed in an aqueous system. Use of the binder obtained by polymerization in the aqueous medium can surely eliminate residual organic solvent in a battery. As a result, deformation of a cell caused by generation of a decomposed gas of the residual organic solvent during the use of the battery can be avoided.

The polymerization in an aqueous medium may be preferably performed by emulsion polymerization of a monomer composition for a negative electrode in a mixture for polymerization containing a monomer composition for a negative electrode, an aqueous medium, and an optional substance which may be added if necessary. As such an aqueous medium, water may be used. Examples of the optional substance which may be added to the mixture for polymerization may include substances such as a polymerization initiator and a dispersant.

Examples of the polymerization initiator for use in the polymerization for obtaining the negative electrode binder may include organic peroxides such as lauroyl peroxide, diisopropyl peroxydicarbonate, di-2-ethylhexyl peroxydicarbonate, t-butyl peroxypivalate, and 3,3,5-trimethyl hexanoyl peroxide, azo compounds such as α,α'-azobisisobutyronitrile, ammonium persulfate, and potassium persulfate. The ratio of the polymerization initiator may be 0.01 to 5 parts by weight relative to 100 parts by weight of the monomer composition.

The dispersant of the negative electrode binder may be those used in usual synthesis. Specific examples thereof may include benzenesulfonates such as sodium dodecyl benzenesulfonate and sodium dodecyl phenyl ether sulfonate; alkylsulfates such as sodium laurylsulfate and sodium tetradodecylsulfate; sulfosuccinates such as sodium dioctylsulfosuccinate and sodium dihexylsulfosuccinate; fatty acid salts such as sodium laurate; ethoxysulfates such as sodium polyoxyethylene lauryl ether sulfate and sodium polyoxyethylene nonyl phenyl ether sulfate; alkanesulfonates; sodium alkyl ether phosphates; non-ionic emulsifiers such as polyoxyethylene nonyl phenyl ether, polyoxyethylene sorbitan laurate, and a polyoxyethylene-polyoxypropylene block copolymer; water-soluble polymers such as gelatin, a maleic anhydride-styrene copolymer, polyvinylpyrrolidone, sodium polyacrylate, and polyvinyl alcohol having a degree of polymerization of 700 or more and a degree of saponification of 75% or more. Any one of them may be solely used. Alternatively, two or more of them may be used in combination. Among them, benzenesulfonates such as sodium dodecyl benzenesulfonate and sodium dodecyl phenyl ether sulfonate; and alkylsulfates such as sodium laurylsulfate and sodium tetradodecylsulfate are preferable. From the viewpoint of excellent resistance to oxidation, benzenesulfonates such as sodium dodecyl benzenesulfonate and sodium dodecyl phenyl ether sulfonate are more preferable. The adding amount of the dispersant may be arbitrarily set, and is usually about 0.01 to 10 parts by weight relative to 100 parts by weight of the monomer composition.

As specific conditions for polymerization, the polymerization reaction temperature is usually 0 to 100°C, and preferably 25 to 80°C. The polymerization reaction time is 1 to 50 hours, and preferably 5 to 20 hours.

### [4. Negative electrode binder; properties]

The negative electrode binder may be obtained as polymer particles in a dispersion medium by the polymerization of the monomer composition for a negative electrode. The number mean particle diameter of the polymer particles is preferably 50 to 500 nm, and more preferably 70 to 400 nm. When the number mean particle diameter of the polymer particles falls within this range, strength and flexibility of the obtained negative electrode are favorable.

The negative electrode binder preferably has a Tg of 0 to 100°C, and preferably 0 to 50°C. When the Tg falls within this range, low-temperature property can be enhanced without losing the flexibility of the negative electrode.

### [5. Negative electrode active material layer; mixing ratio]

In the present invention, the ratio of the negative electrode active material and the negative electrode binder in the negative electrode active material layer is 0.1 to 5 parts by weight, preferably 0.2 to 3 parts by weight, and more preferably 0.5 to 2 parts by weight relative to 100 parts by weight of the negative electrode active material. When the ratio of the negative electrode binder is not more than the aforementioned upper limit, internal resistance can be kept at a low level and output property can be improved. When the ratio of the negative electrode binder is not less than the aforementioned lower limit, adhesion strength can be kept at a high level, and the occurrence of short circuit can be suppressed.

Such a composition may be achieved when the ratio of the negative electrode active material and the negative electrode binder in a negative electrode slurry composition, which will be described below, is adjusted within this range.

### [6. Slurry composition for negative electrode]

The negative electrode active material layer may be formed using a slurry composition for a negative electrode containing the negative electrode active material and the negative electrode binder. If necessary, the slurry composition for a negative electrode may contain another optional substance, in addition to the negative electrode active material and the negative electrode binder.
Examples of the optional substances may include substances such as a medium for adjusting viscosity of the slurry, a preservative, a thickener, an electroconductivity imparting material, a reinforcement material, a dispersant, a leveling agent, an antioxidant, and an electrolyte solution additive having a function of inhibiting decomposition of an electrolyte solution.

### (Medium)

As the medium, the same medium as the aqueous medium used in the polymerization may be used. The ratio of the medium is not particularly limited, and may be appropriately adjusted so that the slurry has properties suitable for a later process. Specifically, the ratio of the medium may be adjusted so that the ratio of the solid content (the substance that remains as a component of an electrode active material layer after drying and heating of the slurry) in the slurry composition for a negative electrode is 30 to 70% by weight, and preferably 40 to 60% by weight.

### (Preservative)

As the preservative, any preservatives may be used. In particular, a benzoisothiazoline compound represented by the following general formula (1), 2-methyl-4-isothiazolin-3-on, or a mixture thereof is preferably used, and particularly the mixture is more preferably used.

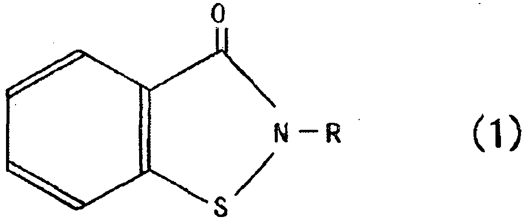

In the formula (1), R represents a hydrogen atom or an alkyl group having 1 to 8 carbons. When a mixture of the benzoisothiazoline compound represented by the aforementioned general formula (1) and 2-methyl-4-isothiazolin-3-on is used, the ratio by weight of these compounds is preferably 1:10 to 10:1. The containing ratio of the preservative in the slurry composition for a negative electrode is preferably 0.001 to 0.1 parts by weight, more preferably 0.001 to 0.05 parts by weight, and still more preferably 0.001 to 0.01 parts by weight relative to 100 parts by weight of the monomer composition.

In the present invention, it is preferable that the binder is obtained by polymerization in an aqueous medium. However, as a result, the binder is maintained as an aqueous dispersion liquid in a preparation process, and the quality thereof is likely to be deteriorated by the propagation of microorganisms. However, when the binder contains such a preservative, the deterioration of the quality can be prevented.

### (Thickener)

Examples of the thickener may include cellulose-based polymers such as carboxymethyl cellulose, methyl cellulose, and hydroxypropyl cellulose, and ammonium salts and alkali metal salts thereof; (modified) poly(meth)acrylic acid and ammonium salts and alkali metal salts thereof; polyvinyl alcohols such as (modified) polyvinyl alcohol, a copolymer of acrylic acid or acrylate and vinyl alcohol, and a copolymer of maleic anhydride or maleic acid, or fumaric acid and vinyl alcohol; polyethylene glycol, polyethylene oxide, polyvinylpyrrolidone, modified polyacrylic acid, oxidized starch, starch phosphate, casein, various modified starch, and acrylonitrile-butadiene copolymer hydrides. In the present invention, "(modified) poly" means "unmodified poly" or "modified poly," and "(meth)acrylic" means "acrylic" or "methacrylic". The containing ratio of the thickener in the negative electrode slurry composition is preferably 0.1 to 10% by weight. When the thickener is contained in the aforementioned ratio, dispersibility of active materials in the slurry can be enhanced, a smooth electrode can be obtained, and excellent load property and cycle property are exhibited.

### (Electroconductivity imparting material)

As the electroconductivity imparting material, electroconductive carbon such as acetylene black, ketchen black, carbon black, vapor phase grown carbon fiber, and carbon nanotube may be used. Carbon powders such as graphite, and fibers and foil of various metals may also be used. The use of the electroconductivity imparting material can improve electrical contact between electrode active materials. In particular, when it is used for a lithium ion secondary battery, discharge load property can be improved.

### (Reinforcement material)

As the reinforcement material, various inorganic and organic fillers in spherical shape, plate shape, rod shape, and fiber shape may be used. The use of the reinforcement material can provide a tough and flexible electrode, whereby excellent long-term cycle property can be obtained.

The containing ratio of the electroconductivity imparting material and a reinforcement agent in the electrode active material layer is usually 0.01 to 20 parts by weight, and preferably 1 to 10 parts by weight relative to 100 parts by weight of the active material. When the containing ratios of the electroconductivity imparting material and the reinforcement agent in the negative electrode active material layer of the secondary battery fall within this range, the electrode can exhibit a high capacity and high load property.

### (Dispersant)

Examples of the dispersant may include an anionic compound, a cationic compound, a nonionic compound, and a polymer compound. The dispersant is selected depending on the electrode active material or a electroconducting agent to be used. The containing ratio of the dispersant in the negative electrode active material layer of the secondary battery is preferably 0.01 to 10% by weight. When the containing ratio of the dispersant in the negative electrode active material layer of the secondary battery falls within this range, stability of the slurry composition for a negative electrode becomes excellent, a smooth electrode can be obtained, and a high battery capacity can be exhibited.

### (Leveling agent)

Examples of the leveling agent may include surfactants such as an alkyl surfactant, a silicon surfactant, a fluorine surfactant, and a metal surfactant. When the surfactant is added, repelling that occurs during a coating process can be prevented, and smoothness of the negative electrode can be improved. The containing ratio of the leveling agent in the negative electrode active material layer of the secondary battery is preferably 0.01 to 10% by weight. When the containing ratio of the leveling agent in the negative electrode active material layer of the secondary battery falls within this range, productivity during the manufacture of electrodes, smoothness, and battery properties become excellent.

### (Antioxidant)

Examples of the antioxidant may include a phenol compound, a hydroquinone compound, an organic phosphorus compound, a sulfur compound, a phenylene diamine compound, and a polymer type phenol compound. The polymer type phenol compound is a polymer having a phenol structure in the molecule. It is preferable to use a polymer type phenol compound having a weight mean molecular weight of 200 to 1,000, and preferably 600 to 700. The containing ratio of the antioxidant in the negative electrode active material layer of the secondary battery is preferably 0.01 to 10% by weight, and more preferably 0.05 to 5% by weight. When the containing ratio of the antioxidant in the negative electrode active material layer of the secondary battery falls within this range, stability of the slurry for a negative electrode, battery capacity, and cycle property become excellent.

### [7. Method for preparing slurry composition for negative electrode]

In the present invention, the method for preparing a slurry composition for a negative electrode is not particularly limited, and the slurry composition may be prepared by mixing the aforementioned components. The mixing operation and mixing order are not limited. For example, the slurry composition may be obtained by adding an optional component to a dispersion liquid containing the negative electrode binder obtained by the aforementioned method.

The device for mixing is not particularly limited as long as it is capable of uniformly mixing the components. Examples thereof for use may include a bead mill, a ball mill, a roll mill, a sand mill, a pigment dispersing device, a grinder, an ultrasonic dispersion device, a homogenizer, a planetary mixer, and a FILMIX mixer. Among them, because of their ability to perform dispersing at high concentration, use of a ball mill, a roll mill, a pigment dispersing device, a grinder, and a planetary mixer is particularly preferable.

From the viewpoints of uniform coating ability and slurry stability over the lapse of time, the viscosity of the slurry composition for a negative electrode is preferably 10 to 100,000 mPa·s, and more preferably 100 to 50,000 mPa·s. The viscosity is a value obtained by measurement at 25°C and at a rotation of 60 rpm with a Brookfield type viscometer.

The solid concentration of the slurry composition for a negative electrode is not particularly limited as long as the slurry composition can be used for coating and immersion and have a viscosity exhibiting fluidity, and it is generally about 10 to about 80% by weight.

### [8. Formation of negative electrode active material layer]

A negative electrode active material layer may be formed by applying the negative electrode slurry composition onto another member such as a collector (or a layer when the layer exists between the collector and the active material layer in the battery of the present invention), and if necessary, drying and heating the composition. The method for applying is not particularly limited. Examples thereof may include a doctor blade method, a dip method, a reverse roll method, a direct roll method, a gravure method, an extrusion method, and a brush application method. The slurry composition for a negative electrode may be applied onto one side of, e.g., the collector, or onto both sides thereof.

The conditions for drying the layer of the slurry composition that have been formed by the application is not particularly limited, and for example, may be 120°C or higher and 1 hour or longer. Examples of the method for drying may include drying by warm air, hot air or low humid air, vacuum drying, and drying by irradiation with (far) infrared radiation or electron beam.

After the application of the slurry composition for a negative electrode onto another member such as a collector (or a layer when the layer exists between the collector and the active material layer in the battery of the present invention) and drying, it is preferable to perform pressurization treatment using, e.g., die press or roll press to decrease the porosity of the electrode. A preferable range of the porosity is 5% to 15%, and more preferably 7% to 13%. When the porosity is not more than the aforementioned upper limit, charging efficiency and discharging efficiency can be enhanced. When the porosity is not less than the aforementioned lower limit, a high volume capacity can be obtained, and peeling-off of the electrode can be suppressed. Further, when a curable polymer is used, it is preferable to perform curing in addition to the drying process.

The thickness of the negative electrode active material layer is preferably 1 to 200 µm, and preferably 10 to 100 µm. When the thickness of the negative electrode active material layer falls within this range, output density and energy density can be well balanced.

### [9. Positive electrode active material]

In the present invention, the positive electrode active material constituting the positive electrode active material layer contains one or more species of transition metal elements selected from the group consisting of manganese, iron, and nickel, and combinations thereof. Specifically, the positive electrode active material may be an oxide mainly containing lithium and one or more species of transition metal elements selected from the group consisting of manganese, iron, and nickel, and combinations thereof. Examples of the oxide may include a lithium-containing complex metal oxide having a layered structure, a lithium-containing complex metal oxide having a spinel structure, and a lithium-containing complex metal oxide having an olivine structure.

Examples of the lithium-containing complex metal oxide having a layered structure may include a lithium-containing nickel oxide (LiNiO₂), and a lithium complex oxide of Ni-Mn-Al.

Examples of the lithium-containing complex metal oxide having a spinel structure may include lithium manganate (LiMn₂O₄), and Li[Mn_{3/2}M_{1/2}]O₄ of which some Mn are substituted with other transition metals (wherein M is, e.g., Cr, Fe, Ni or Cu).

Examples of the lithium-containing complex metal oxide having an olivine structure may include olivine lithium phosphate compound represented by LiₓMPO₄ (wherein M is selected from Mn, Fe, Ni, Cu, Mg, Zn, V, Ca, Sr, Ba, Ti, Al, Si, B, and Mo, at least a part of the total amount of oxide contains Mn, Fe, and Ni as M, and 0 ≤ X ≤ 2). An iron oxide which has poor electric conductivity may be used as an electrode active material covered with a carbon material by reduction firing under the presence of a carbon source material. Further, these compounds may be compounds obtained by partial elemental substitution.

As the positive electrode active material, a positive electrode active material containing iron as the transition metal element is preferable, and a positive electrode active material containing iron as the transition metal and having an olivine structure, that is, olivine iron is more preferable. When such olivine iron is used as the positive electrode active material, output density and safety can be enhanced.

The positive electrode active material may exist in a particle shape in the positive electrode active material layer. The particle diameter of the positive active material in the positive electrode active material layer is usually 0.001 to 50 µm, and preferably 0.01 to 25 µm. When the particle diameter of the positive active material falls within this range, the amount of a binder during the preparation of a positive electrode slurry composition can be reduced, and a reduction in a battery capacity can be suppressed. In addition, this facilitates the adjustment of the viscosity of the slurry composition to a appropriate value for applying.

### [10. Positive electrode binder; monomer composition]

In the present invention, the positive electrode binder constituting the positive electrode active material layer is obtained by the polymerization of a monomer composition for a positive electrode containing an acrylonitrile monomer and an ethylenically unsaturated carboxylic acid monomer in a predetermined ratio. Specific examples of the ethylenically unsaturated carboxylic acid monomer may be similar to those in the monomer composition for a negative electrode, and may include compounds such as acrylic acid, methacrylic acid, itaconic acid, and fumaric acid.

The ratio of the acrylonitrile monomer in the monomer composition for a positive electrode is preferably 10 to 35 parts by weight, more preferably 10 to 30 parts by weight, and still more preferably 12 to 25 parts by weight relative to 100 parts by weight of the monomer composition for a positive electrode. The containing ratio of the ethylenically unsaturated carboxylic acid monomer in the monomer composition for a positive electrode is preferably 1 to 10 parts by weight, more preferably 1 to 8 parts by weight, and still more preferably 1 to 5 parts by weight relative to 100 parts by weight of the monomer composition for a positive electrode.

Since the monomer composition for a positive electrode contains the acrylonitrile monomer and the ethylenically unsaturated carboxylic acid monomer in the aforementioned predetermined ratio, it is possible to obtain a lithium ion secondary battery which has a high capacity, can maintain a high capacity even when charging and discharging are performed in a rapid manner and when charging and discharging are performed in a low temperature environment, and also has high safety. In addition, employment of the monomer composition for a positive electrode containing the acrylonitrile monomer and the ethylenically unsaturated carboxylic acid monomer in the aforementioned predetermined ratio enables employment of an aqueous medium in the preparation of a binder. As a result, deformation of a cell caused by generation of a decomposed gas from a residual organic solvent during the use of the battery can be avoided.

If necessary, the monomer composition for a positive electrode may contain another optional monomer, in addition to the acrylonitrile monomer and the ethylenically unsaturated carboxylic acid monomer. Examples of such optional monomers may preferably include an alkyl (meth)acrylate monomer. Examples of such an alkyl (meth)acrylate monomer may include alkyl acrylates such as 2-ethylhexyl acrylate, ethyl acrylate, propyl acrylate, isopropyl acrylate, n-butyl acrylate, isobutyl acrylate, t-butyl acrylate, n-amyl acrylate, isoamyl acrylate, n-hexyl acrylate, 2-ethylhexyl acrylate, hexyl acrylate, nonyl acrylate, lauryl acrylate, and stearyl acrylate; alkyl methacrylates such as ethyl methacrylate, propyl methacrylate, isopropyl methacrylate, n-butyl methacrylate, isobutyl methacrylate, t-butyl methacrylate, n-amyl methacrylate, isoamyl methacrylate, n-hexyl methacrylate, 2-ethylhexyl methacrylate, octyl methacrylate, isodecyl methacrylate, lauryl methacrylate, tridecyl methacrylate, and stearyl methacrylate, and other compounds. Among these, alkyl acrylates are preferable, and 2-ethylhexyl acrylate, ethyl acrylate, and n-butyl acrylate are more preferable. When these alkyl acrylates are used, a positive electrode excellent in flexibility and adhesion property can be obtained. The ratio of alkyl (meth)acrylate monomer in the monomer composition for a positive electrode is preferably 50 to 89 parts by weight, more preferably 60 to 85 parts by weight, and still more preferably 65 to 80 parts by weight relative to 100 parts by weight of the monomer composition for a positive electrode. When the ratio of the alkyl (meth)acrylate monomer is not more than the aforementioned upper limit, the flexibility of the positive electrode can be improved, and the output density of the lithium ion secondary battery can be increased. On the other hand, when the ratio of the alkyl (meth)acrylate monomer is not less than the aforementioned lower limit, the adhesion property of the positive electrode can be improved, and the safety of the lithium ion secondary battery can be enhanced.

### [11. Positive electrode binder; preparation method]

The method for polymerizing the monomer composition for a positive electrode for preparing the positive electrode binder is not particularly limited, and a positive electrode binder may be prepared by the same method as the aforementioned method for preparing the negative electrode binder except that the monomer composition for a positive electrode is used as the monomer composition. The medium for use, optional substances to be added to the mixture for polymerization, the ratio thereof, and specific conditions for polymerization may be the same as those used in the preparation of the negative electrode binder.

### [12. Positive electrode binder; properties]

The positive electrode binder may be obtained as polymer particles in a dispersion medium by the polymerization of a monomer composition for a positive electrode. The number mean particle diameter of the polymer particles is preferably 50 to 500 nm, and more preferably 70 to 400 nm. When the number mean particle diameter of the polymer particles falls within this range, the strength and flexibility of obtained positive electrode become favorable.

The positive electrode binder preferably has a Tg of -50 to 0°C, and preferably -45 to -5°C. When the Tg falls within this range, the flexibility of the positive electrode can be improved and the output density of the lithium ion secondary battery can be increased.

The positive electrode binder is a polymer having a swelling degree of 2.0 to 15.0 times, preferably 2.0 to 10.0 times, and more preferably 2.0 to 5.0 times. When the swelling degree of the positive electrode binder is not more than the aforementioned upper limit, internal resistance can be kept at a low level and output property can be improved. When the swelling degree of the positive electrode binder is not less than the aforementioned lower limit, adhesion strength can be kept at a high level, and the occurrence of short circuit can be suppressed. The swelling degree of the positive electrode binder is the swelling degree against the electrolyte solution. The swelling degree against the electrolyte solution is a swelling degree caused by immersion in the electrolyte solution, and is a value obtained as follows. Firstly, the binder particulate polymer in the binder dispersion liquid is converted into a film by evaporation of a medium in a certain container to obtain a sheet-shaped molded body of 20 mm in length, 20 mm in width, and 100 µm in thickness. The sheet-shaped molded body is immersed in an electrolyte solution at 60°C for 72 hours. Then the molded body is pulled out, and the electrolyte solution on the surface of the molded body is wiped off. The swelling degree of the molded body is obtained as an increment (%) in length before and after the immersion in the electrolyte solution. As the electrolyte solution for use in the measurement of the swelling degree, the same electrolyte solution as one constituting the battery of the present invention is used. When the swelling degree of the positive electrode binder is less than 2.0, output density is reduced. When it exceeds 15.0, cycle property decreases and durability is reduced. The swelling degree of the positive electrode binder may be adjusted by adjusting the ratio of acrylonitrile and an alkyl (meth)acrylate monomer.

### [13. Positive electrode active material layer; mixing ratio]

In the present invention, the ratio of the positive electrode active material and the positive electrode binder in the positive electrode active material layer is 0.1 to 5 parts by weight, preferably 0.5 to 5 parts by weight, and more preferably 1 to 5 parts by weight relative to 100 parts by weight of the positive electrode active material. When the ratio of the positive electrode binder is not more than the aforementioned upper limit, internal resistance can be kept at a low level and output property can be improved. When the ratio of the positive electrode'binder is not less than the aforementioned lower limit, adhesion strength can be kept at a high level, and the occurrence of short circuit can be suppressed.

Such a composition may be achieved when the ratio of the positive electrode active material and the positive electrode binder in a positive electrode slurry composition, which will be described below, is adjusted within this range.

### [14. Slurry composition for positive electrode, preparation method, and formation of positive electrode active material layer]

The positive electrode active material layer may be formed using a slurry composition for a positive electrode containing the positive electrode active material and the positive electrode binder. If necessary, the slurry composition for a positive electrode may contain another optional substance, in addition to the positive electrode active material and the positive electrode binder. Examples of the optional substances may include the same substances as those which the slurry composition for a negative electrode may contain, and the ratio of the optional substance may be the same as the ratio of the substance in the slurry composition for a negative electrode.

The method for preparing the slurry composition for a positive electrode and the method for forming the positive electrode active material layer using the slurry composition may be performed in the same manner as the method for preparing the slurry composition for a negative electrode and the method for forming the negative electrode active material layer using the slurry composition as described above.

After the application of the slurry composition for a positive electrode onto another member such as a collector (or a layer when the layer exists between the collector and the active material layer) and drying, it is preferable to perform pressurization treatment using, e.g., die press or roll press to decrease the porosity of the electrode. A preferable range of the porosity is 5% to 15%, and more preferably 7% to 13%. When the porosity is not more than the aforementioned upper limit, charging efficiency and discharging efficiency can be enhanced. When the porosity is not less than the aforementioned lower limit, a high volume capacity can be obtained, and peeling-off of the electrode can be suppressed. Further, when a curable polymer is used, it is preferable to perform curing in addition to the drying process.

The thickness of the positive electrode active material layer is preferably 5 to 300 µm, and more preferably 10 to 250 µm. When the thickness of the positive electrode active material layer falls within the range, both load property and energy density reach high levels.

### [15. Collector]

Each of the negative electrode and the positive electrode may optionally have a collector in addition to the active material layer. The collector is not particularly limited as long as the collector is made of a material having electric conductivity and electrochemical durability. In view of having heat resistance, a metal material is preferable, and examples thereof may include iron, copper, aluminum, nickel, stainless steel, titanium, tantalum, gold, and platinum. In particular, aluminum is preferable as the positive electrode, and copper is preferable as the negative electrode. The shape of the collector is not particularly limited, and is preferably in a form of a sheet having a thickness of about 0.001 to 0.5 mm. In order to enhance adhesion strength with the active material layer, it is preferable that the collector has a surface which has been roughened in advance of the formation of the active material layer (or a layer when the layer exists between the collector and the active material layer) on the surface. Examples of the roughening method may include a mechanical grinding method, an electrolysis grinding method, and a chemical grinding method. In the mechanical grinding method, a cloth or paper for grinding having abrasive particles adhering thereon, a grind stone, an emery wheel, and a wire brush provided with steel wire may be used. Further, in order to improve the adhesion strength and electric conductivity of the mixture material, an intermediate layer may be formed on the surface of the collector.

### [16. Electroconductive adhesive layer]

Each of the negative electrode and the positive electrode may further have an electroconductive adhesive layer interposed between the active material layer and the collector. The presence of such an electroconductive adhesive layer can increase the adhesion strength of the active material layer with the collector, and can also reduce the internal resistance of the battery. The electroconductive adhesive layer may be formed using an electroconductive adhesive composition containing a binder for an electroconductive adhesive and electroconductive particles dispersed in the binder.

### (Electroconductive particle)

The electroconductive particles constituting the electroconductive adhesive composition are not particularly limited as long as they are particles having electric conductivity, and carbon particles are usually used. The carbon particles are particles consisting only of carbon, or substantially consisting only of carbon. Specific examples of the carbon particles may include graphite having high electric conductivity due to the presence of delocalized π electron (e.g., natural graphite and artificial graphite); carbon black which is a spherical aggregate having a turbostratic structure formed of a combination of some layers of graphitic carbon microcrystal (e.g., acetylene black, ketjen black, other furnace black, channel black, and thermal lamp black); a carbon fiber; and a carbon whisker. Among these, graphite and carbon black are particularly preferable since the carbon particles can be packed in the electroconductive adhesive layer with high density, electron transfer resistance can be reduced, and the internal resistance of the lithium ion secondary battery can be further reduced.

As the carbon particles constituting the electroconductive adhesive composition, any of the aforementioned carbon particles may be solely used. However, it is particularly preferable to use two or more species thereof in combination. Specific examples of the combination may include combinations of graphite and carbon black, graphite and carbon fibers, graphite and carbon whiskers, carbon black and carbon fibers, and carbon black and carbon whiskers. The combinations of graphite and carbon black, graphite and carbon fibers, and carbon black and carbon fibers are preferable, and the combinations of graphite and carbon black, and graphite and carbon fibers are particularly preferable. When carbon particles of this combination are used, the carbon particles are packed in the electroconductive adhesive layer with high density. Thus, electron transfer resistance is further reduced, and the internal resistance of the lithium ion secondary battery is further reduced. Therefore, they are preferable.

The electric resistivity of the carbon particles constituting the electroconductive adhesive composition is preferably 0.0001 to 1 Ω·cm, more preferably 0.0005 to 0.5 Ω·cm, and particularly preferably 0.001 to 0.1 Ω·cm. When the electric resistivity of the carbon particles falls within the range, the electron transfer resistance of the electroconductive adhesive layer can be reduced, and the internal resistance of the lithium ion secondary battery can be reduced. The electric resistivity is determined by measuring a resistance value under application of pressure to the carbon particles with a powder resistance measuring system (model MCP-PD51; manufactured by DIA Instruments Co., Ltd.) and, from a resistance value R (Ω) converged relative to the pressure and an area S (cm²) and a thickness d (cm) of the compressed carbon particle layer, calculating the electric resistivity ρ(Ω·cm) = R x (S/d).

The volume mean particle diameter of the carbon particles constituting the electroconductive adhesive composition is preferably 0.01 to 20 µm, more preferably 0.05 to 15 µm, and particularly preferably 0.1 to 10 µm. When the volume mean particle diameter of the carbon particles falls within this range, the carbon particles are packed in the electroconductive adhesive layer with high density. Thus, electron transfer resistance is further reduced, and the internal resistance of the lithium ion secondary battery is further reduced. The volume mean particle diameter is the value obtained by calculation of measurement by a laser diffraction particle size distribution measurement device (SALD-3100; manufactured by Shimadzu Corporation).

### (Binder for electroconductive adhesive)

The binder for an electroconductive adhesive constituting the conductive adhesive composition is not particularly limited as long as it is a compound that can cause mutual adhesion of the electroconductive particles. A suitable binder is a dispersion type binding agent having dispersibility in a solvent. Examples of the dispersion type binder may include polymer compounds such as a fluorine-containing polymer, a diene-based polymer, a (meth)acrylate-based polymer, polyimide, polyamide, and a polyurethane-based polymer. A fluorine-containing polymer, a diene-based polymer, and a (meth)acrylate-based polymer are preferable, and a diene-based polymer and a (meth)acrylate-based polymer are more preferable since thereby withstanding voltage can be increased and the energy density of the battery can be increased.

The diene-based polymer is a homopolymer of a conjugated diene or a copolymer obtained by polymerization of a monomer mixture containing a conjugated diene, or a compound obtained by hydrogenation of them. The ratio of the conjugated diene in the monomer mixture is usually 30% by weight or more, preferably 40% by weight or more, and more preferably 50% by weight or more. Specific examples of the diene-based polymers may include a conjugated diene homopolymer such as polybutadiene and polyisoprene; an aromatic vinyl-conjugated diene copolymer such as a styrene-butadiene copolymer (SBR) which may be modified by a carboxyl group; a copolymer of an aromatic vinyl-conjugated diene-carboxylic acid group-containing monomer such as a styrene-butadiene-methacrylic acid copolymer and a styrene-butadiene-itaconic acid copolymer; a vinyl cyanide-conjugated diene copolymer such as an acrylonitrile-butadiene copolymer (NBR); and a hydrogenated SBR and a hydrogenated NBR.

The (meth)acrylate-based polymer is a polymer containing a monomer unit derived from a compound represented by the general formula (2) : CH₂=CR¹-COOR² (wherein R¹ represents a hydrogen atom or a methyl group, and R² represents an alkyl group or a cycloalkyl group). Specific examples of the compound represented by the general formula (2) may include acrylates such as ethyl acrylate, propyl acrylate, isopropyl acrylate, n-butyl acrylate, isobutyl acrylate, t-butyl acrylate, n-amyl acrylate, isoamyl acrylate, n-hexyl acrylate, 2-ethylhexyl acrylate, hexyl acrylate, nonyl acrylate, lauryl acrylate, and stearyl acrylate; and methacrylates such as ethyl methacrylate, propyl methacrylate, isopropyl methacrylate, n-butyl methacrylate, isobutyl methacrylate, t-butyl methacrylate, n-amyl methacrylate, isoamyl methacrylate, n-hexyl methacrylate, 2-ethylhexyl methacrylate, octyl methacrylate, isodecyl methacrylate, lauryl methacrylate, tridecyl methacrylate, and stearyl methacrylate. Among them, acrylates are preferable, and n-butyl acrylate and 2-ethylhexyl acrylate are particularly preferable since the strength of the obtained electrode can be improved. The ratio of the monomer unit derived from the compound represented by the general formula (2) in the (meth)acrylate-based polymer is usually 50% by weight or more, and preferably 70% by weight or more. When a (meth)acrylate-based polymer in which the ratio of the monomer unit derived from the compound represented by the aforementioned general formula (2) falls within the range is used, high heat resistance can be achieved, and the internal resistance of the obtained lithium ion secondary battery can be reduced.

It is preferable that the binder for an electroconductive adhesive constituting the electroconductive adhesive composition has a polar group. The presence of the polar group in the binder for an electroconductive adhesive can further enhance the binding property of the collector and the active material layer. The term "polar group" in the binder for an electroconductive adhesive refers to a functional group which is capable of dissociating in water and a functional group which has polarization. Specific examples thereof may include an acid group, a nitrile group, an amido group, an amino group, a hydroxyl group, and an epoxy group. Among these, an acid group, a nitrile group, and an epoxy group are preferable, and an acid group and a nitrile group are more preferable because of their ability to elevate withstanding voltage. The binder for an electroconductive adhesive constituting the electroconductive adhesive may have one species of the aforementioned polar groups, but may also have two or more species. The polar group in the binder for an electroconductive adhesive may be introduced into a polymer by, for example, using a monomer having a polar group or a polymerization initiator having a polar group during polymerization of a polymer constituting the binder for an electroconductive adhesive.

The containing ratio of the polar group in the binder for an electroconductive adhesive is preferably 0.1 to 40% by weight, more preferably 0.5 to 30% by weight, and particularly preferably 1 to 20% by weight, in terms of the containing ratio of a polymerization unit based on the monomer having a polar group in the polymer constituting the binder for an electroconductive adhesive. When the containing ratio of the polar group in the binder for an electroconductive adhesive falls within this range, binding property with the collector becomes excellent, and the electrode strength of the electrode can be increased.

Examples of the monomer having a nitrile group as the polar group may include acrylonitrile and methacrylonitrile. Acrylonitrile is preferable because of its ability to elevate withstanding voltage.

Examples of the monomer containing an acid group as the polar group may include a monomer having a carboxylic acid group including a monobasic acid-containing monomer such as acrylic acid and methacrylic acid, and a dibasic acid-containing monomer such as maleic acid, fumaric acid, and itaconic acid; and a monomer having a sulfonic acid group such as styrene sulfonic acid and methacryllsulfonic acid. Among them, a monomer having a carboxylic acid group is preferable, and a dibasic acid-containing monomer is particularly preferable because of its ability to elevate withstanding voltage.

It is preferable that the binder for the electroconductive adhesive in the electroconductive adhesive composition prepared for forming the electroconductive adhesive layer has a particulate shape and is in a state of being mixed with electroconductive particles. The binder having such a feature can improve binding property with the collector, can suppress reduction in the capacity of the resulting electrode, and can suppress deterioration caused by repetition of charging and discharging. Examples of the particulate binder for an electroconductive adhesive may include a binder wherein polymer particles are dispersed in water, such as latex, and a powdery binder obtained by drying such a dispersion liquid. In the case where the binder for an electroconductive adhesive has a particulate shape, the number mean particle diameter thereof is not particularly limited, and is usually 0.0001 to 100 µm, preferably 0.001 to 10 µm, and more preferably 0.01 to 1 µm. When the number mean particle diameter of the particulate binder for an electroconductive adhesive falls within this range, use of even a small amount of the binder can impart excellent binding power to the electroconductive adhesive layer and the active material layer. The number mean particle diameter is determined by measuring the diameters of 100 binding agent particles which have been selected randomly in a transmission electron microscope image, and then calculating an arithmetic mean value. The shape of the particle may be spherical or heteromorphic. One of these binding agents may be solely used. Alternatively, two or more species thereof may be used in combination.

The glass transition temperature (Tg) of the binder for an electroconductive adhesive constituting the electroconductive adhesive composition is preferably 50°C or lower, and more preferably -40 to 0°C. When the glass transition temperature (Tg) of the binder for an electroconductive adhesive falls within this range, use of even a small amount of the binder exerts an excellent binding ability, and in turn exerts an excellent property between the collector and the active material layer, which leads to high electrode strength and high flexibility. Therefore, electrode density can thereby be easily increased by the pressing process during the formation of an electrode.

The amount of the binder for an electroconductive adhesive in the electroconductive adhesive composition is usually 0.1 to 50 parts by weight, preferably 0.5 to 20 parts by weight, and more preferably 1 to 10 parts by weight relative to 100 parts by weight of electroconductive particles. When the amount of the binder for an electroconductive adhesive in the electroconductive adhesive layer falls within this range, the adhesion property between the active material layer and the collector can be sufficiently secured, a battery capacity can be increased, and internal resistance can be reduced.

### (Other components)

If necessary, the electroconductive adhesive composition constituting the electroconductive adhesive layer may contain another optional material, in addition to the electroconductive particles and the binder for an electroconductive adhesive. Examples of the optional materials may include a carboxymethyl cellulose salt and a surfactant.

### (Carboxymethyl cellulose salt)

The carboxymethyl cellulose salt is a dispersant used for forming the electroconductive adhesive layer, and specific examples thereof may include carboxymethyl cellulosic acid, ammonium salt of carboxymethyl cellulose, alkali metal salt of carboxymethyl cellulose, and alkaline earth metal salt of carboxymethyl cellulose. Among them, ammonium salt of carboxymethyl cellulose and alkali metal salt of carboxymethyl cellulose are preferable, and ammonium salt of carboxymethyl cellulose is particularly preferable. In particular, when ammonium salt of carboxymethyl cellulose is used, the electroconductive particles and the binding agent can be uniformly dispersed. Thus, the density in the electroconductive adhesive layer can be increased, and electron transfer resistance can be reduced.

The amount of the carboxymethyl cellulose salt in the electroconductive adhesive composition may be within a range not impairing the effects of the present invention, and is not particularly limited. The amount is preferably 0.1 to 20 parts by weight, more preferably 0.5 to 15 parts by weight, and particularly preferably 0.8 to 10 parts by weight relative to 100 parts by weight of the electroconductive particles. When the amount of the carboxymethyl cellulose salt in the electroconductive adhesive composition falls within this range, the durability of the resultant battery can be improved.

### (Surfactant)

A surfactant is a substance which facilitates uniform dispersion of the electroconductive particles and the binding agent, to reduce collector surface tension. Specific examples thereof may include anionic surfactants such as alkyl sulfuric acid ester salts, alkylbenzenesulfonates, fatty acid salts, and naphthalene sulfonate formalin condensate; nonionic surfactants such as polyoxyethylene alkyl ether, and glycerin fatty acid esters; cationic surfactants such as alkylamine salts, and quaternary ammonium salts; and amphoteric surfactants such as alkylamine oxide, and alkyl betaine. Among them, anionic surfactants and nonionic surfactants are preferable, and anionic surfactants are particularly preferable since thereby the durability of the battery becomes excellent.

The amount of the surfactant in the electroconductive adhesive composition is preferably 0.5 to 20 parts by weight, more preferably 1.0 to 15 parts by weight, and particularly preferably 2.0 to 10 parts by weight relative to 100 parts by weight of the electroconductive particles. When the content of the surfactant in the electroconductive adhesive composition falls within this range, the durability of the resultant battery becomes excellent.

The electroconductive adhesive composition may be obtained by mixing or kneading the electroconductive particles, the binder for an electroconductive adhesive, and, if necessary, another optional material in a solvent (dispersion medium). As a device for mixing and kneading, a ball mill, a sand mill, a pigment dispersing machine, a grinder, an ultrasonic dispersion machine, a homogenizer, a planetary mixer, or a Hobart mixer may be specifically used.

The solid concentration of the electroconductive adhesive composition depends on the coating method, but it is usually 10 to 60% by weight, preferably 15 to 50% by weight, and more preferably 20 to 40% by weight. When the solid concentration falls within this range, the obtained electroconductive adhesive layer is packed with high density, whereby it is possible to obtain high energy density and high output density of the battery.

The viscosity of the electroconductive adhesive composition depends on the coating method, but it is usually 50 to 10,000 mPa·s, preferably 100 to 5,000 mPa·s, and particularly preferably 200 to 2,000 mPa·s. When the viscosity of the electroconductive adhesive composition falls within this range, a uniform electroconductive adhesive layer can be formed on the collector.

The electroconductive adhesive layer may be formed by applying the electroconductive adhesive composition onto the collector and drying it. The method for applying the electroconductive adhesive composition to form a coating layer is not particularly limited. For example, the electroconductive adhesive composition may be applied onto the collector by, e.g., a doctor blade coating method, a dip coating method, a reverse-roll coating method, a direct-roll coating method, a gravure coating method, an extrusion coating method, or a brush coating method, for forming the coating layer.

Examples of the method for drying the coating layer of the electroconductive adhesive composition may include drying with warm air, hot air or low humid air, vacuum drying, and drying by irradiation with (far) infrared radiation or electron beam. Among them, a drying method with hot air or drying by irradiation with far infrared radiation is preferable. It is preferable that a drying temperature and a drying time are those whereby a solvent in a slurry electroconductive adhesive composition which has been applied onto the collector can be completely removed. Specifically, the drying temperature is usually 50 to 300°C, and preferably 80 to 250°C. The drying time is usually 2 hours or shorter, and preferably 5 seconds to 30 minutes.

### (Thickness of electroconductive adhesive layer)

The thickness of the electroconductive adhesive layer is usually 0.01 to 20 µm, preferably 0.1 to 15 µm, and particularly preferably 1 to 10 µm. When the thickness of the electroconductive adhesive layer falls within the range, favorable adhesion can be obtained, and electron transfer resistance can be reduced.

### [17. Separator]

The separator for use in the present invention may be a porous film having fine pore diameter, which does not have electron conductivity but has ion conductivity and is highly resistant to an organic solvent. Specifically, any of the following (i) to (iv) may be used:

(i) a microporous film made of a resin;
(ii) a woven fabric made of resin fibers or a nonwoven fabric made of the fibers;
(iii) a layer of aggregate of non-electroconductive particles; and
(iv) a multilayer body formed by combining one or more layers of (i) to (iii) described above.

### (Layers (i) and (ii))

The microporous film (i) is a film in which a resin film is formed and many fine pores are then formed. Examples of the method for forming such a microporous film may include the following methods:
(i-1) a dry method in which: a resin is melt-extruded to form a film; the film is annealed at low temperatures to grow a crystalline domain; and then stretching is performed to extend an amorphous region, to thereby form a microporous film; and
(i-2) a wet method in which: a hydrocarbon solvent, an optional low molecular material that may be added if necessary, and a resin are mixed; a film of the mixture is formed; and then, when the solvent and the low molecular material are gathered in an amorphous phase and formation of island phase begins, the solvent and the low molecular material are removed using another highly volatile solvent, to thereby form a microporous film.

Among the dry method (i-1) and the wet method (i-2), the dry method is preferable since a large void which may reduce resistance is easily obtainable.

Examples of materials for the microporous film (i) may include resins of polyolefins (polyethylene, polypropylene, polybutene, polyvinyl chloride) and other resins, such as polyethylene terephthalate, polycycloolefin, polyethersulfone, polyamide, polyimide, polyimideamide, polyaramide, polycycloolefin, nylon, and polytetrafluoroethylene. In particular, resins such as any of polyolefin-based resins, a mixture thereof and a copolymer thereof are preferable since the resin is likely to form a composite with the aforementioned (iii) (a slurry for forming the layer (iii) can be readily applied thereonto), and the film thickness of a separator can be reduced and the active material ratio in the battery can be increased to increase a capacity per volume.

It is preferable that materials for fibers of the woven fabric or nonwoven fabric (ii) are also a polyolefin-based resin that is the same as the material for the microporous film (i).

More specific examples of the polyolefin-based resin used for the material for the separator (i) or (ii) may include a homopolymer of, e.g., polyethylene or polypropylene, a copolymer thereof, and a mixture thereof. Examples of polyethylene may include low-density, medium-density, and high-density polyethylenes. In terms of anti-piercing strength and mechanical strength, high-density polyethylene is preferable. Further, in order to impart flexibility, two or more species of the polyethylene may be mixed. The polymerization catalyst used for preparing the polyethylene is not particularly limited, and examples thereof may include a Ziegler-Natta catalyst, a Phillips catalyst, and a Metallocene catalyst. In order to achieve both mechanical strength and high permeability, the viscosity mean molecular weight of polyethylene is preferably 100,000 or more and 12,000,000 or less, and more preferably 200,000 or more and 3,000,000 or less. Examples of polypropylene may include a homopolymer, a random copolymer, and a block copolymer. One species thereof or a mixture of two or more species thereof may be used.
Further, the polymerization catalyst is not particularly limited, and examples thereof may include a Ziegler-Natta catalyst, and a Metallocene catalyst. Furthermore, the stereoregularity of polypropylene is not particularly limited, and isotactic, syndiotactic, and atactic polymers may be used. In terms of inexpensiveness, it is desirable to use isotactic polypropylene. Further, within a range not impairing the effects of the present invention, the polyolefin-based resin may further contain an appropriate amount of polyolefin other than polyethylene and polypropylene, and additives such as an antioxidant and a nucleating agent.

The thickness of the separator (i) or (ii) is usually 0.5 to 40 µm, preferably 1 to 30 µm, and more preferably 1 to 10 µm. When the thickness falls within this range, the resistance of the separator in the battery is reduced, and coating on the separator can be performed with good workability.

### (Layer iii)

The layer (iii) of aggregate of non-electroconductive particles may be obtained by curing a mixture that contains non-electroconductive particles and a binding resin that may be added if necessary. Such a mixture is typically a slurry, and such a slurry is applied onto the film (i) or another member such as the woven fabric or nonwoven fabric (ii) and then cured to thereby obtain the layer (iii).

### (Layer (iii): non-electroconductive particles)

It is desirable that non-electroconductive particles constituting the layer (iii) stably exist under the environment for use in the lithium ion secondary battery and are also electrochemically stable. For example, various non-electroconductive inorganic and organic particles may be used.

Examples of the inorganic particles may include particles of an oxide such as iron oxide, silicon oxide, aluminum oxide, magnesium oxide, and titanium oxide; particles of a nitride such as aluminum nitride, and boron nitride; particles of a covalent crystal such as silicone, and diamond; particles of an insoluble ionic crystal such as barium sulfate, calcium fluoride, and barium fluoride; particles obtained by subjecting the aforementioned various particles to treatment such as element substitution, surface treatment, and formation of solid solution; and a combination of two or more thereof. In particular, oxide particles are preferable since they are stable in electrolyte solution and have electropotential stability.

As the organic particles, particles formed of various polymer materials such as polystyrene, polyethylene, polyimide, a melamine resin, and a phenolic resin may be used. The polymer materials constituting the particles may be a mixture, a modified body, a derivative, a random copolymer, an alternate copolymer, a graft copolymer, a block copolymer, or a cross-linked body. Inside the particle, regions of two or more species of different polymer materials may exist. Further, it is also possible to use particles having electric insulation property that are obtained by a surface treatment of fine powders of electroconductive metals and electroconductive compounds or oxides such as carbon black, graphite, SnO₂, ITO and metallic powder, wherein the surface treatment is performed using any of the above-exemplified non-electroconductive materials.

As the non-electroconductive particles constituting the layer (iii), two or more species of various inorganic particles and organic particles may be used in combination.

The mean particle diameter (D50 volume mean particle diameter) of the non-electroconductive particles constituting the layer (iii) is preferably 5 nm or larger and 10 µm or smaller, and more preferably 10 nm or larger and 5 µm or smaller. The mean particle diameter of the non-electroconductive particles falling within the range can facilitate control of the dispersing state and production of a film having a predetermined uniform thickness. It is particularly preferable to adjust the mean particle diameter of the non-electroconductive particles within a range of 50 nm or more and 2 µm or less for realizing excellent dispersion, easy coating operation, and excellent controllability of voids.

Specifically, in order to suppress the aggregation of particles and to obtain suitable fluidity of a slurry, the BET specific surface area of the non-electroconductive particles is preferably 0.9 to 200 m²/g, and more preferably 1.5 to 150 m²/g.

The shape of the non-electroconductive particles constituting the layer (iii) is not particularly limited, and may be a spherical shape, a needle shape, a rod shape, a spindle shape, a plate shape, or a scale shape. A spherical shape, a needle shape, and a spindle shape are preferable. Further, porous particles may also be used.

The amount of the non-electroconductive particles in the layer (iii) is preferably 5 to 99% by weight, and more preferably 50 to 98% by weight. When the content of the non-electroconductive particles in the layer (iii) falls within the range, a layer exhibiting high thermal stability and strength can be obtained.

### (Layer (iii): binding agent)

In the present invention, the layer (iii) contains the non-electroconductive particles as an essential component, and in addition, preferably contains a binding agent if necessary. The presence of the binding agent can increase the strength of the layer (iii) and prevent a problem of, e.g., cracks

The binding agent is not particularly limited, and various resin components and soft polymers may be used.

For example, as the resin component, polyethylene, polytetrafluoroethylene (PTFE), polyvinylidene fluoride (PVDF), a tetrafluoroethylene-hexafluoropropylene copolymer (FEP), a polyacrylic acid derivative, and a polyacrylonitrile derivative may be used. One species thereof may be solely used. Alternatively, two or more species thereof may be used in combination.

Examples of the soft polymers may include acrylic soft polymers which is a homopolymer of derivative of acrylic acid or methacrylic acid or a copolymer of the derivative and a monomer copolymerizable therewith, such as polybutyl acrylate, polybutyl methacrylate, polyhydroxyethyl methacrylate, polyacrylamide, polyacrylonitrile, a butyl acrylate-styrene copolymer, a butyl acrylate-acrylonitrile copolymer, and a butyl acrylate-acrylonitrile-glycidyl methacrylate copolymer; isobutylene-based soft polymers such as polyisobutylene, isobutylene-isoprene rubber, and an isobutylene-styrene copolymer; diene-based soft polymers such as polybutadiene, polyisoprene, a butadiene-styrene random copolymer, an isoprene-styrene random copolymer, an acrylonitrile-butadiene copolymer, an acrylonitrile-butadiene-styrene copolymer, a butadiene-styrene block copolymer, a styrene-butadiene-styrene block copolymer, an isoprene-styrene block copolymer, and a styrene-isoprene-styrene block copolymer; silicon-containing soft polymers such as dimethyl polysiloxane, diphenyl polysiloxane, and dihydroxy polysiloxane; olefin-based soft polymers such as liquid polyethylene, polypropylene, poly(1-butene), an ethylene-α-olefin copolymer, a propylene-α-olefin copolymer, an ethylene-propylene-diene copolymer (EPDM), and an ethylene-propylene-styrene copolymer; vinyl-based soft polymers such as polyvinyl alcohol, polyvinyl acetate, polyvinyl stearate, and a vinyl acetate-styrene copolymer; epoxy-based soft polymers such as polyethylene oxide, polypropylene oxide, and epichlorohydrin rubber; fluorine-containing soft polymers such as vinylidene fluoride type rubber, and ethylene tetrafluoride-propylene rubber; and other soft polymers such as natural rubber, polypeptide, protein, polyester-based thermoplastic elastomer, vinyl chloride-based thermoplastic elastomer, and polyamide-based thermoplastic elastomer. Among them, an acrylic soft polymer is preferable, and acrylic soft polymer containing an acrylonitrile polymerization unit is more preferable. Use of the aforementioned copolymer as the binding agent can decrease elution to an electrolyte solution and prevent deformation of the layer (iii). Further, the resulting binding agent can exert low tendency to be eluted at high temperature while keeping the swellable property against the electrolyte solution, and thus can bring about excellent high-temperature property. Therefore, the combination of such a binding agent and the non-electroconductive particles can further improve the safety of the layer (iii).

In terms of giving flexibility at room temperature to the layer (iii) to suppress cracking during roll winding or rolling up and chipping of the layer (iii), the glass transition temperature of the binding agent constituting the layer (iii) is preferably 15°C or lower, and more preferably 0°C or lower. The glass transition temperature of the binding agent can be adjusted by varying the using ratio of monomers forming the polymer.

The weight mean molecular weight of the binding agent constituting the layer (iii) is preferably 5,000 or more, and more preferably 10,000 or more, and 10,000,000 or less. When the weight mean molecular weight of the binding agent falls within the range, the dispersibility of the non-electroconductive particles and the strength of the layer (iii) can be improved.

The containing ratio of the binding agent in the layer (iii) is preferably 0.1 to 10 parts by weight, and more preferably 1 to 5 parts by weight relative to 100 parts by weight of the non-electroconductive particles. When the containing ratio of the binding agent in the layer (iii) falls within the range, migration of lithium ions can be prevented and elevation of resistance can thereby be suppressed, while the binding property between the non-electroconductive particles, the binding property to an electrode, and flexibility are maintained.

### (Layer (iii): optional components)

If necessary, the layer (iii) may contain an optional component in addition to the non-electroconductive particles and the binding agent. Examples of the optional components may include a dispersant, and an electrolyte solution additive having a function such as suppression of electrolyte solution decomposition. These are not particularly limited as long as they do not influence battery reaction.

Examples of the dispersant may include an anionic compound, a cationic compound, a non-ionic compound, and a polymer compound. The dispersant may be selected depending on non-electroconductive particles for use.

Examples of other optional components may include nano-fine particles of, e.g., fumed silica and fumed alumina; and surfactants such as an alkyl surfactant, a silicon surfactant, a fluorine surfactant, and a metal surfactant. Addition of the nano-fine particles enables control of the thixotropy of the slurry for forming the layer (iii), whereby the leveling property of the resulting layer (iii) can be improved. When the surfactant is mixed, possible repelling during coating can be prevented, and smoothness of the electrode can be improved. The amount of the surfactant in the layer (iii) is preferably in a range which does not influence battery property, and preferably 10% by weight % or less.

In order to control strength, hardness, and thermal shrinkage, the layer (iii) may further contain particles and fiber compounds other than non-electroconductive particles. Further, upon forming the layer (iii) on a surface of another member, the surface of that member on which the layer (iii) is formed may be preliminarily coated with a low molecular compound or a polymer compound, or may be preliminarily be subjected to treatment with electromagnetic beams such as ultraviolet rays, or subjected to plasma treatment with corona discharge or a plasma gas. These treatments can improve adhesion, and reduce the surface tension with an electrolyte solution to thereby improve impregnating property of a liquid.

### (Layer (iii): formation method)

The layer (iii) may be formed by applying a slurry for forming the layer (iii) onto another member and then drying it, wherein the slurry contains a dispersion medium and the aforementioned various components constituting the layer (iii) that are dispersed in the dispersion medium. When the separator (i) or (ii) is used as the aforementioned "another member", a separator in which they are laminated (the aforementioned (iv)) can be obtained.

As a solvent for the slurry for forming the layer (iii), either water or an organic solvent may be used.

Examples of the organic solvent may include aromatic hydrocarbons such as benzene, toluene, xylene, and ethylbenzene, and chlorinated aliphatic hydrocarbons such as methylene chloride, chloroform, and carbon tetrachloride. Other examples thereof may include pyridine, acetone, dioxane, dimethylformamide, methyl ethyl ketone, diisopropyl ketone, cyclohexanone, tetrahydrofuran, n-butyl phthalate, methyl phthalate, ethyl phthalate, tetrahydrofurfuryl alcohol, ethyl acetate, butyl acetate, 1-nitoropropane, carbon disulfide, tributyl phosphate, cyclohexane, cyclopentane, xylene, methyl cyclohexane, ethyl cyclohexane, and n-methylpyrrolidone. One species of these solvents may be solely used, or a mixture solvent thereof may also be used.

One of these solvents may be solely used or a mixed solvent obtained by mixing two or more species of solvents may also be used. Among them, a solvent having excellent ability to disperse non-electroconductive particles, a low boiling point, and a high volatility is preferable since the solvent can be removed in a short period of time at a low temperature. Specifically, acetone, cyclohexanone, cyclopentane, tetrahydrofuran, cyclohexane, xylene, water, N-methyl pyrolidone, and a mixture solvent thereof are preferable. Further, cyclohexanone, xylene, N-methyl pyrolidone, and a mixture solvent thereof are particularly preferable since they have low volatility and excellent workability during coating of a slurry.

The solid concentration of the slurry for forming the layer (iii) is not particularly limited as long as the slurry can be used for coating and immersion, and has viscosity exhibiting fluidity, and it is generally about 20 to about 50% by weight.

A method for preparing the slurry for forming the layer (iii) is not particularly limited. Regardless of mixing methods and mixing orders, a slurry in which non-electroconductive particles are highly dispersed can be obtained. The device for mixing is not particularly limited as long as it is capable of uniformly mixing the components. Examples thereof for use may include a ball mill, a sand mill, a pigment dispersing machine, a grinder, an ultrasonic dispersion machine, a homogenizer, and a planetary mixer. In particular, it is preferable to use a high dispersion machine such as a bead mill, a roll mill, and Fill mix which can provide high dispersion shear action.

The method for applying the slurry for forming the layer (iii) onto another member is not particularly limited. Examples thereof may include a doctor blade method, a dip method, a reverse roll method, a direct roll method, a gravure method, an extrusion method, and a brush application method. Among them, a dip method and a gravure method are preferable since thereby a uniform layer can be obtained. Examples of the drying method may include drying by warm air, hot air or low humid air, vacuum drying, and drying by irradiation with (far) infrared radiation or electron beam. The drying temperature is changed depending on the species of the solvent for use. In order to remove the solvent completely, for example, when a solvent having low volatility such as N-methylpyrrolidone is used, it is preferable to perform drying with a blow dryer at a high temperature of 120°C or higher. On the contrary, when a solvent having high volatility is used, it may be dried at a low temperature of 100°C or lower.

### (Properties of Layer (iii))

The layer (iii) formed by the aforementioned formation method shows a state in which non-electroconductive particles are bound via a binding agent, and has a structure in which voids are formed between the non-electroconductive particles. The electrolyte solution can infiltrate into the voids, and thereby favorable battery reaction can be obtained.

The thickness of the layer (iii) is not particularly limited, and may be appropriately set depending on the type of the lithium ion secondary battery in which the layer (iii) is used. When it is too thin, a uniform film cannot be formed, and when it is too thick, the capacity per volume (weight) in the battery is reduced. Therefore, it is preferably 0.1 to 50 µm, more preferably 0.2 to 10 µm, and particularly preferably 0.5 to 10 µm.

### [18. Electrolyte solution]

In the present invention, as the electrolyte solution, a non-aqueous electrolyte solution in which a supporting electrolyte is dissolved in an organic solvent may be used. As the supporting electrolyte, a lithium salt is used. The lithium salt is not particularly limited, and examples thereof may include LiPF₆, LiAsF₆, LiBF₄, LiSbF₆, LiAlCl4, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li which are easily soluble to the solvent and show a high dissociation rate are preferable. It is possible to use two or more species thereof in combination. The use of the supporting electrolyte having high dissociation rate elevates lithium ion conductivity, and therefore the lithium ion conductivity can be adjusted by selecting the species of the supporting electrolyte.

The organic solvent for use in the electrolyte solution is not particularly limited as long as the supporting electrolyte can be dissolved therein, and suitable examples thereof may include carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. In particular, carbonates are preferable since they have high permittivity, are easily solvated with ions, and have a wide stable electropotential area. When the viscosity of the used solvent is low, the lithium ion conductivity becomes higher. Therefore it is preferable to use a mixture of a carbonate having low viscosity and a carbonate solvent having high permittivity. For example, a mixed solvent of ethylene carbonate (EC)/diethyl carbonate (DEC) in a volume ratio of 3/7 to 7/3 is preferable since thereby both high solvation and low viscosity can be achieved.

If necessary, the electrolyte solution may contain an optional additive. Examples of the additive may include a carbonate compound such as vinylene carbonate (VC).

The concentration of the supporting electrolyte in the electrolyte solution is usually 1 to 30 % by weight, and preferably 5% by weight to 20% by weight. The supporting electrolyte is usually used in a concentration of 0.5 to 2.5 mol/L depending on the type of the supporting electrolyte. When the concentration of the supporting electrolyte is too low or too high, the ion conductivity tends to decrease.

A substance referred to herein as "electrolyte solution" for the sake of convenience in the present invention is not necessarily limited to a liquid, and a non-liquid material exhibiting the same action may also be used as "electrolyte solution". Examples thereof may include a polymer electrolyte such as polyethylene oxide and polyacrylonitrile, a gel-type polymer electrolyte in which the polymer electrolyte is impregnated with an electrolyte solution, and inorganic solid electrolyte such as LiI and Li₃N.

### [19. Configuration of lithium ion secondary battery]

The lithium ion secondary battery of the present invention is not particularly limited as long as it has the negative electrode, the positive electrode, the electrolyte solution, and the separator. Any configuration of usual lithium ion secondary batteries may be appropriately adopted. For example, the positive electrode and the negative electrode are stacked with a separator interposed therebetween. The stacked layers are wound, folded, etc. in conformity with the battery shape, and then put into a battery container. Then an electrolyte solution is poured into the battery container, and the container is then sealed. In this manner, a battery may be configured.

Particularly, the battery may preferably have a multilayer structure in which the negative electrode, the positive electrode, and the separator are stacked as a flat, non-curving layers. For example, the battery may preferably have a multilayer structure of (collector) - (positive electrode active material layer) - (separator) - (negative electrode active material layer) - (collector) - (negative electrode active material layer) - (separator) - (positive electrode active material layer) - (collector) - ... The multilayer stack structure may be obtained by forming a negative electrode active material layer or a positive electrode active material layer on both sides of a flat plate collector, forming a multilayer body having a layer structure of (negative electrode active material layer) - (collector) - (negative electrode active material layer) (an electroconductive adhesive layer may be optionally interposed between the collector and the negative electrode active material layer) and another multilayer body having a layer structure of (positive electrode active material layer) - (collector) - (positive electrode active material layer) (an electroconductive adhesive layer may be optionally interposed between the collector and the positive electrode active material layer), and combining them.

If necessary, the lithium ion secondary battery of the present invention may have an optional component such as expanded metal, over-current protective elements such as fuse and PTC elements, and a lead plate. Provision of these components can prevent increase of pressure inside of the battery, and overcharging and overdischarging.

Examples of the outer shape of the battery may include a coin shape, a button shape, a sheet shape, a cylindrical shape, a rectangular shape, and a layered shape. A layered shape is preferable in terms of excellent output density and safety.

### [20. Use]

Use of the lithium ion secondary battery of the present invention are not particularly limited, and the battery may be used for the same application as the conventional secondary batteries. In particular, the lithium ion secondary battery can be used as an electric power supply for a compact electronic devices such as a mobile phone and a notebook-type personal computer and a large apparatus such as an electric automobile, taking advantage of the properties that are high capacity, an ability to maintain high capacity even when charging and discharging are performed in a rapid manner and when charging and discharging are performed in a low temperature environment, and also high safety.

### EXAMPLES

The present invention will be described in more detail hereinbelow with reference to Examples, but the present invention is not limited to these.

In the following Examples, "part(s)" and "%" regarding the quantitative ratio of substances represent ratios by weight unless otherwise specified. In Examples, measurements of various physical properties were performed as follows.

### (Swelling degree)

A binder dispersion liquid was examined as a sample. The medium in the sample was evaporated in a certain container to produce a binder film. The binder film was immersed in an electrolyte solution (which is the same as an electrolyte solution constituting the battery) at 60°C for 72 hours and then pulled out, and the electrolyte solution on the surface of the binder film was wiped off. The mean (%) of ratios of length changes in a longitudinal direction and in a transverse direction before and after the immersion in the electrolyte solution was obtained as a swelling degree of the binder. The swelling degree was evaluated using an electrolyte solution (EC/DEC = 1/2 (volume ratio), 1 M LiPF₆).

### (Rate property: capacity keeping rate)

Lithium ion secondary batteries obtained in respective Examples and Comparative Examples were charged to 4.3 V by the constant current method at 0.1 C and then discharged to 3.0 V at 0.1 C, to obtain 0.1 C discharging capacities.

After that, the batteries were charged to 4.3 V at 0.1 C and then discharged to 3.0 V at 20 C, to obtain 20 C discharging capacities.

10 battery cells were subjected to the measurement, and mean value of measured values was taken as a 0.1 C discharging capacity a and a 1 C discharging capacity b. A capacity keeping rate represented by a ratio of electric capacitance values, i.e., a ratio of the 1 C discharging capacity b relative to the 0.1 C discharging capacity a ((b/a) x 100, unit: %) was calculated, and this rate was taken as the evaluation standard of rate property. The larger this value is, the better the rate property is. All measurements of the rate property were performed under an environment at 25°C.

### (Low-temperature lithium receiving property: capacity ratio)

Lithium ion secondary batteries obtained in respective Examples and Comparative Examples were charged to 4.3 V by the constant current method at 0.1 C and 25°C and then discharged to 3.0 V at 0.1 C, to obtain 0.1 C discharging capacities at 25°C.

After that, the batteries were charged to 4.3 V at 0.1 C and -10°C and then discharged to 3.0 V at 0.1 C, to obtain 0.1 C discharging capacities at -10°C.

10 battery cells were subjected to the measurement, and mean value of measured values was taken as a discharging capacity c at 25°C and a discharging capacity d at -10°C. A capacity keeping rate represented by a ratio of electric capacitance values, i.e., a ratio of the -10°C discharging capacity d relative to the 25°C discharging capacity c ((d/c) x 100, unit:%) was calculated, and this rate was taken as the evaluation standard of low-temperature lithium receiving property. The larger the value is, the better the low-temperature lithium receiving property is.

### (Evaluation of Safety: rate of occurrence of short circuit)

Each of 100 lithium ion secondary battery cells obtained in each of Examples and Comparative Examples was charged to 4.3 V by the constant current method at 0.1 C, and the number e of a cell that can be still charged up to 4.3 V was counted. Then the rate of occurrence of short circuit (((100 - e)/100) x 100, unit: %) was calculated. The smaller this value is, the better the safety is.

### (Example 1)

### (1-1. Preparation of negative electrode binder)

A container with a pressure resistance of 5 MPa equipped with a stirrer was charged with 85 parts of styrene, 13 parts of 1,3-butadiene, 2 parts of methacrylic acid, 5 parts of sodium dodecylbenzenesulfonate, 150 parts of deionized water, and 1 part of potassium persulfate as a polymerization initiator, and the content was stirred sufficiently and heated to 50°C to initiate polymerization. When the amount of the monomer consumption reached 95.0%, the mixture was cooled to stop the reaction. To the mixture, 0.005 parts of 2-methyl-4-isothiazolin-3-on was added as a preservative to obtain a diene-based polymer particle aqueous dispersion liquid (number mean particle diameter of the polymer particles: 100 nm). having a solid concentration of 40% as a negative electrode binder aqueous dispersion liquid.

### (1-2. Preparation of slurry composition for negative electrode of lithium secondary battery electrode)

As a thickener, carboxymethyl cellulose (CMC, "BSH-12" available from Dai-Ichi Kogyo Seiyaku Co., Ltd.) was used. The degree of polymerization of the thickener was 1,700 and the degree of etherification was 0.65.

A planetary mixer with a disper was charged with 100 parts of artificial graphite (mean particle diameter: 24.5 µm, distance between graphite layers (interval of (002) planes (d value) by the X-ray diffraction method: 0.354 nm) as a negative electrode active material and 1 part of 1% aqueous solution of the thickener. The solid concentration of the mixture was adjusted to 55% with deionized water, and then mixing was performed at 25°C for 60 minutes. Subsequently, the solid concentration was adjusted to 52% with deionized water, and mixing was performed at 25°C for 15 minutes to obtain a mixed liquid.

To the aforementioned mixed liquid, 1 part (based on the solid content) of the negative binder aqueous dispersion liquid obtained in the aforementioned (1-1) and deionized water were added to adjust a final solid concentration to 42%, and mixing was performed for another 10 minutes. This mixed liquid was defoamed under reduced pressure to obtain a slurry composition for a negative electrode of the lithium ion secondary battery having good fluidity.

### (1-3. Preparation of positive electrode binder)

A container with a pressure resistance of 5 MPa equipped with a stirrer was charged with 78 parts of 2-ethylhexyl acrylate, 20 parts of acrylonitrile, 2 parts of methacrylic acid, 5 parts of sodium dodecylbenzenesulfonate, 150 parts of deionized water, and 1 part of potassium persulfate as a polymerization initiator, and the content was stirred sufficiently and heated to 60°C to initiate polymerization. When the amount of the monomer consumption reached 95.0%, the mixture was cooled to stop the reaction. To the mixture, 0.005 parts of 2-methyl-4-isothiazolin-3-on was added as a preservative to obtain an acrylate-based polymer particle aqueous dispersion liquid (number mean particle diameter of the polymer particles: 200 nm, swelling degree against the electrolyte solution: 4.5 times) having a solid concentration of 40% as a positive electrode binder aqueous dispersion liquid.

A positive electrode binder was separated from the resulting positive electrode binder aqueous dispersion liquid, and the swelling degree thereof was measured. The swelling degree was found out to be 4.5 times.

### (1-4. Preparation of slurry composition for positive electrode of lithium ion secondary battery)

As a thickener, carboxymethyl cellulose (CMC, "BSH-12" available from Dai-Ichi Kogyo Seiyaku Co., Ltd.) was used. The degree of polymerization of the thickener was 1,700 and the degree of etherification was 0.65.

A planetary mixer with a disper was charged with 100 parts of LiFePO₄ (mean particle diameter: 0.5 µm, having an olivine crystalline structure) as a positive electrode active material and 1 part of 1% aqueous solution of the thickener. The solid concentration of the mixture was adjusted to 68% with deionized water, and then mixing was performed at 25°C for 60 minutes. Subsequently, the solid concentration was adjusted to 66% with deionized water, and the mixing was performed at 25°C for 15 minutes to obtain a mixed liquid.

To the aforementioned mixed liquid, 1 part (based on the solid content) of the positive binder aqueous dispersion liquid obtained in the aforementioned (1-3) and deionized water were added to adjust a final solid concentration to 64%, and mixing was performed for another 10 minutes. This mixed liquid was defoamed under reduced pressure to obtain a slurry composition for a positive electrode of the lithium ion secondary battery having good fluidity.

### (1-5. Separator having organic particle porous film)

Organic particles (polystyrene beads, volume mean particle diameter: 1.0 µm), the positive electrode binder aqueous dispersion liquid obtained in the aforementioned (1-3), and carboxymethyl cellulose (CMC, "BSH-12" available from DAI-ICHI KOGYO SEIYAKU CO., LTD., which is the same as those used as the thicker for a positive electrode and a negative electrode) were mixed in 100:3:1 (solid content ratio), and water was mixed in the mixture so as to adjust the solid concentration to 40%. The mixture was then dispersed with a bead mill to prepare a slurry 1 for an organic particle porous film.

The slurry 1 for an organic particle porous film was applied onto a monolayer polypropylene film for a separator (65 mm in width, 500 mm in length, 25 µm in thickness, manufactured by the dry method, porosity: 55%) with a wire bar so that the thickness of a porous film layer after drying was 5 µm, and then dried at 60°C for 30 seconds to form an organic particle porous film, whereby a separator 1 with an organic particle porous film was obtained.

### (1-6. Electroconductive adhesive layer)

80 parts of spherical graphite (available from Nippon Carbon Co., Ltd.) having an aspect ratio of 7 and a volume mean particle diameter of 1.0 µm as electroconductive particles,
20 parts of furnace black (Super-P; available from TIMCAL Ltd.) having a volume mean particle diameter of 0.4 µm as carbon black,
4 parts in terms of solid content of 4.0% aqueous solution of ammonium salt of carboxymethyl cellulose (DN-10L; available from Daicel Corporation) as a dispersant,
8 parts in terms of solid content of 40% aqueous dispersion liquid of carboxylic acid group-containing diene-based polymer (copolymer obtained by emulsion polymerization of 60% by weight of styrene, 35% by weight of butadiene, and 5% by weight of itaconic acid) having a glass transition temperature of -40°C and a number mean particle diameter of 0.25 µm as a binder for an electroconductive adhesive, and deionized water at an amount whereby the total solid concentration was adjusted to 30% were mixed, to prepare an electroconductive adhesive composition.

The electroconductive adhesive composition was discharged from a die onto a collector (aluminum foil, thickness: 20 µm) having a thickness of 20 µm, so that the composition was applied onto one surface of the collector at a formation speed of 30 m/min, and then was dried at 120°C for 5 minutes to form an electroconductive adhesive layer having a thickness of 4 µm. Thus a collector multilayer body having a layer structure of (electroconductive adhesive layer) - (collector) was obtained.

### (1-7. Negative electrode)

The slurry composition for a negative electrode of a lithium ion secondary battery obtained in the aforementioned (1-2) was applied onto one surface of a copper foil collector (thickness: 20 µm) with a comma coater so that the film thickness after drying was about 200 µm. The applied layer was dried for 2 minutes (moving at a speed of 0.5 m/min through a drying zone having a length of 1m, at 60C), and heat-treated (at 120°C) for 2 minutes, to obtain a raw material for an electrode having a layer structure of (negative electrode active material layer) - (collector). The raw material for an electrode was rolled with a roll press to obtain a multilayer body for a negative electrode having a negative electrode active material layer with a thickness of 80 µm. The obtained multilayer body for a negative electrode was cut into a circular shape having a diameter of 14 mm, to obtain a negative electrode for a lithium ion secondary battery.

### (1-8. Positive electrode)

The slurry composition for a positive electrode of a lithium ion secondary battery obtained in the aforementioned (1-4) was applied onto one surface of the collector multilayer body (collector: aluminum foil) obtained in the aforementioned (1-6) with a comma coater so that the film thickness after drying was about 100 µm. The applied layer was dried for 2 minutes (moving at a speed of 0.5 m/min through a drying zone having a length of 1m, at 60°C), and heat-treated (at 120°C) for 2 minutes, to a obtain raw material for an electrode having a layer structure of (positive electrode active material layer) - (electroconductive adhesive layer) - (collector). The, raw material for an electrode was rolled with a roll press to obtain a multilayer body for a positive electrode having a positive electrode active material layer with a thickness of 50 µm. The obtained multilayer body for a positive electrode was cut into a circular shape having a diameter of 13 mm, to obtain a positive electrode for a lithium ion secondary battery.

### (1-9. Production and evaluation of battery)

The negative electrode, the positive electrode, and the separator were disposed in a casing container (a container of coin-type battery CR2032, made of stainless steel, 20 mm in diameter, 3.2 mm in height, and 0.25 mm in thickness) to produce a lithium ion secondary battery.

The obtained separator 1 with a porous film obtained in the aforementioned (1-5) was cut into a circular shape having a diameter of 18 mm.

The positive electrode obtained in the aforementioned (1-8) was placed on the bottom of the casing container so that the surface of the positive electrode on the collector side was brought into contact with the casing container. The separator was placed on the surface of the positive electrode active material layer side of the positive electrode. The negative electrode obtained in the aforementioned (1-7) was placed on the separator so that the surface of the negative electrode on the negative electrode active material layer side faced to the separator. Further, expanded metal was disposed on the surface of the collector side of the negative electrode, and a polypropylene packing for hermetically sealing an opening part of the casing container was installed in the casing container. An electrolyte solution (EC/DEC = 1/2 (volume ratio), 1 M LiPF₆) was injected into the container so that there remained no air. The container was covered with a cap made of stainless steel having a thickness of 0.2 mm via the polypropylene packing. The cap was fixed to seal the container, to thereby produce a lithium ion secondary battery having a diameter of 20 mm and a thickness of about 3.2 mm. As to the resultant battery, rate property and low-temperature lithium receiving property were measured and safety was evaluated. The results are shown in Table 1.

### (Example 2)

### (2-1. Preparation of positive electrode binder)

A container with a pressure resistance of 5 MPa equipped with a stirrer was charged with 78 parts of 2-ethylhexyl acrylate, 20 parts of acrylonitrile, 2 parts of methacrylic acid, 5 parts of sodium dodecylbenzenesulfonate, 150 parts of deionized water, and 1 part of potassium persulfate as a polymerization initiator, and the content was stirred sufficiently and heated to 60°C to initiate polymerization. When the amount of the monomer consumption reached 95.0%, the reaction mixture was cooled to stop the reaction. Thus, an acrylate-based polymer particle aqueous dispersion liquid having a solid concentration of 40% (number mean particle diameter of polymer particles: 200 nm, swelling degree against electrolyte solution: 4.5 times) was obtained. 360 parts of NMP was added to 100 parts of the polymer particle aqueous dispersion liquid, and water was evaporated under reduced pressure to obtain an NMP solution having a solid concentration of 10%.

The obtained NMP solution of a positive electrode binder was put in a certain container, and NMP was evaporated to form a binder film. The swelling degree thereof was measured, and found out to be 4.5 times.

### (2-2. Preparation of slurry composition for positive electrode of lithium ion secondary battery)

A planetary mixer with a disper was charged with 100 parts of LiFePO₄ (mean particle diameter: 0.5 µm, having an olivine crystalline structure) as a positive electrode active material. The solid concentration was adjusted to 68% with NMP, and then mixing was performed at 25°C for 60 minutes. Subsequently, the solid concentration was adjusted to 66% with NMP, and mixing was performed at 25°C for 15 minutes to obtain a mixed liquid.

To the aforementioned mixed liquid, 1 part (based on the solid content) of the positive binder solution obtained in the aforementioned (2-1) and NMP were added to adjust a final solid concentration to 64%, and mixing was performed for another 10 minutes. This mixed liquid was defoamed under reduced pressure to obtain a slurry composition for a positive electrode of a lithium ion secondary battery having good fluidity.

A battery was produced in the same manner as in Example 1 except that the adding amount of 2-methyl-4-isothiazolin-3-on was changed to 0.002 parts in step (1-1) and the slurry for a positive electrode of a lithium ion secondary battery obtained in the aforementioned (2-2) was used as the slurry for a positive electrode of a lithium ion secondary battery in step (1-8). The resultant battery was evaluated by the same evaluation methods as in Example 1. Further, the swelling degree of the positive electrode binder was measured. The results are shown in Table 1.

### (Example 3)

A battery was produced in the same manner as in Example 1 except that LiNiO₂ was used in place of LifePO₄ as a positive electrode active material in step (1-3). The resultant battery was evaluated by the same evaluation methods as in Example 1. Further, the swelling degree of the positive electrode binder was measured. The results are shown in Table 1.

### (Example 4)

A battery was produced in the same manner as in Example 1 except that LiMnO₂ was used in place of LiFePO₄ as a positive electrode active material in step (1-3). The resultant battery was evaluated by the same evaluation methods as in Example 1. Further, the swelling degree of the positive electrode binder was measured. The results are shown in Table 1.

### (Example 5)

A battery was produced in the same manner as in Example 1 except that the ratio of styrene was changed to 72 parts and the ratio of 1,3-butadiene was changed to 26 parts in step (1-1). The resultant battery was evaluated by the same evaluation methods as in Example 1. Further, the swelling degree of the positive electrode binder was measured. The results are shown in Table 1.

### (Example 6)

A battery was produced in the same manner as in Example 1 except that the ratio of styrene was changed to 88 parts and the ratio of 1,3-butadiene was changed to 10 parts in step (1-1). The resultant battery was evaluated by the same evaluation methods as in Example 1. Further, the swelling degree of the positive electrode binder was measured. The results are shown in Table 1.

### (Example 7)

A battery was produced in the same manner as in Example 1 except that the ratio of 2-ethylhexyl acrylate was changed to 86 parts and the ratio of acrylonitrile was changed to 12 parts (the ratio of methacrylic acid was still 2 parts) in step (1-3). The resultant battery was evaluated by the same evaluation methods as in Example 1. Further, the swelling degree of the positive electrode binder was measured. The results are shown in Table 1.

### (Example 8)

A battery was produced in the same manner as in Example 1 except that step (1-6) was not performed and aluminum foil having a thickness of 20 µm on which an electroconductive adhesive layer was not formed was used in place of the collector multilayer body in step (1-8). The resultant battery was evaluated by the same evaluation methods as in Example 1. Further, the swelling degree of the positive electrode binder was measured. The results are shown in Table 1.

### (Example 9)

A battery was produced in the same manner as in Example 1 except that step (1-5) was not performed and a monolayer polypropylene separator (65 mm in width, 500 mm in length, 25 µm in thickness, produced by the dry method; porosity: 55%) on which a porous film was not formed was used in place of the separator 1 with a porous film in step (1-9). The resultant battery was evaluated by the same evaluation methods as in Example 1. Further, the swelling degree of the positive electrode binder was measured. The results are shown in Table 1.

### (Example 10)

A battery was produced in the same manner as in Example 1 except that graphite (mean particle diameter: 14.7 µm, distance between graphite layers (interval of (002) planes (d value) by the X-ray diffraction method): 0.361 nm) was used in place of the artificial graphite having a distance between the graphite layers of 0.354 in step (1-2). The resultant battery was evaluated by the same evaluation methods as in Example 1. Further, the swelling degree of the positive electrode binder was measured. The results are shown in Table 2.

### (Example 11)

A battery was produced in the same manner as in Example 1 except that the ratio of 2-ethylhexyl acrylate was changed to 73 parts and the ratio of acrylonitrile was changed to 25 parts (the ratio of methacrylic acid was still 2 parts) in step (1-3). The resultant battery was evaluated by the same evaluation methods as in Example 1. Further, the swelling degree of the positive electrode binder was measured. The results are shown in Table 2.

### (Example 12)

A battery was produced in the same manner as in Example 1 except that the ratio of 2-ethylhexyl acrylate was changed to 68 parts and the ratio of acrylonitrile was changed to 30 parts (the ratio of methacrylic acid was still 2 parts) in step (1-3). The resultant battery was evaluated by the same evaluation methods as in Example 1. Further, the swelling degree of the positive electrode binder was measured. The results are shown in Table 2.

### (Example 13)

A battery was produced in the same manner as in Example 1 except that the ratio of 1,3-butadiene was changed to 11 parts and the ratio of methacrylic acid was changed to 4 parts (the ratio of styrene was still 85 parts) in step (1-1). The resultant battery was evaluated by the same evaluation methods as in Example 1. Further, the swelling degree of the positive electrode binder was measured. The results are shown in Table 2.

### (Example 14)

A battery was produced in the same manner as in Example 1 except that the adding ratio of the negative electrode binder aqueous dispersion liquid was changed to 0.7 parts (based on a solid content) in step (1-2). The resultant battery was evaluated by the same evaluation methods as in Example 1. Further, the swelling degree of the positive electrode binder was measured. The results are shown in Table 2.

### (Example 15)

A battery was produced in the same manner as in Example 1 except that the adding ratio of the negative electrode binder aqueous dispersion liquid was changed to 2 parts (based on a solid content) in step (1-2). The resultant battery was evaluated by the same evaluation methods as in Example 1. Further, the swelling degree of the positive electrode binder was measured. The results are shown in Table 2.

### (Example 16)

A battery was produced in the same manner as in Example 1 except that the ratio of 2-ethylhexyl acrylate was changed to 76 parts and the ratio of methacrylic acid was changed to 4 parts (the ratio of acrylonitrile was still 20 parts) in step (1-3). The resultant battery was evaluated by the same evaluation methods as in Example 1. Further, the swelling degree of the positive electrode binder was measured. The results are shown in Table 2.

### (Example 17)

A battery was produced in the same manner as in Example 1 except that the adding ratio of the positive electrode binder aqueous dispersion liquid was changed to 0.7 part (based on a solid content) in step (1-4). The resultant battery was evaluated by the same evaluation methods as in Example 1. Further, the swelling degree of the positive electrode binder was measured. The results are shown in Table 2.

### (Example 18)

A battery was produced in the same manner as in Example 1 except that the adding ratio of the positive electrode binder aqueous dispersion liquid was changed to 4 parts (based on a solid content) in step (1-4). The resultant battery was evaluated by the same evaluation methods as in Example 1. Further, the swelling degree of the positive electrode binder was measured. The results are shown in Table 2.

### (Comparative Example 1)

A battery was produced in the same manner as in Example 1 except that the ratio of styrene was changed to 65 parts, the ratio of 1,3-butadiene was changed to 28 parts, and the ratio of methacrylic acid was changed to 7 parts in step (1-1). The resultant battery was evaluated by the same evaluation methods as in Example 1. Further, the swelling degree of the positive electrode binder was measured. The results are shown in Table 3.

### (Comparative Example 2)

A battery was produced in the same manner as in Example 1 except that the ratio of styrene was changed to 95 parts, the ratio of 1,3-butadiene was changed to 4.95 parts, and the ratio of methacrylic acid was changed to 0.05 part in step (1-1). The resultant battery was evaluated by the same evaluation methods as in Example 1. Further, the swelling degree of the positive electrode binder was measured. The results are shown in Table 3.

### (Comparative Example 3)

A battery was produced in the same manner as in Example 1 except that LiCoO₂ was used in place of LiFePO₄ as a positive electrode active material in step (1-3). The resultant battery was evaluated by the same evaluation methods as in Example 1. Further, the swelling degree of the positive electrode binder was measured. The results are shown in Table 3.

### (Comparative Example 4)

A battery was produced in the same manner as in Example 1 except that the ratio of 2-ethylhexyl acrylate was changed to 93 parts and the ratio of acrylonitrile was changed to 5 parts (the ratio of methacrylic acid was still 2 parts) in step (1-3). The resultant battery was evaluated by the same evaluation methods as in Example 1. Further, the swelling degree of the positive electrode binder was measured. The results are shown in Table 3.

### (Comparative Example 5)

A battery was produced in the same manner as in Example 1 except that the ratio of 2-ethylhexyl acrylate was changed to 58 parts and the ratio of acrylonitrile was changed to 40 parts (the ratio of methacrylic acid was still 2 parts) in step (1-3). The resultant battery was evaluated by the same evaluation methods as in Example 1. Further, the swelling degree of the positive electrode binder was measured. The results are shown in Table 3.

### (Comparative Example 6)

A battery was produced in the same manner as in Example 1 except that the following points were changed.
- In step (1-1), the ratio of methacrylic acid was changed to 0.5 parts and the ratio of 1,3-butadiene was changed to 14.5 parts (the ratio of styrene was still 85 parts).
- In step (1-3), the ratio of 2-ethylhexyl acrylate was changed to 79.5 parts and the ratio of methacrylic acid was changed to 0.5 parts (the ratio of acrylonitrile was still 20 parts).

The resultant battery was evaluated by the same evaluation methods as in Example 1. Further, the swelling degree of the positive electrode binder was measured. The results are shown in Table 3.

### (Comparative Example 7)

A battery was produced in the same manner as in Example 1 except that the following points were changed.
- In step (1-1), the ratio of methacrylic acid was changed to 0.5 parts and the ratio of 1,3-butadiene was changed to 14.5 parts (the ratio of styrene was still 85 parts).
- In step (1-3), the ratio of 2-ethylhexyl acrylate was changed to 79.5 parts and the ratio of methacrylic acid was changed to 0.5 parts (the ratio of acrylonitrile was still 20 parts).
- In steps (1-1) and (1-3), 2-methyl-4-isothiazolin-3-on was not added.

The resultant battery was evaluated by the same evaluation methods as in Example 1. Further, the swelling degree of the positive electrode binder was measured. The results are shown in Table 3.

**Table 1**

| | Ex.1 | Ex.2 | Ex.3 | Ex.4 | Ex.5 | Ex.6 | Ex.7 | Ex.8 | Ex.9 |
|---|---|---|---|---|---|---|---|---|---|
| Carbonaceous material (parts) | 100 | 100 | 100 | 100 | 100 | 100 | 100 | 100 | 100 |
| Distance between graphite layers (nm) | 0.354 | 0.354 | 0.354 | 0.354 | 0.354 | 0.354 | 0.354 | 0.354 | 0.354 |
| Negative electrode styrene monomer ratio | 85 | 85 | 85 | 85 | 72 | 88 | 85 | 85 | 85 |
| Negative electrode methacrylic acid ratio | 2 | 2 | 2 | 2 | 2 | 2 | 2 | 2 | 2 |
| Negative electrode 1,3-butadiene ratio | 13 | 13 | 13 | 13 | 26 | 10 | 13 | 13 | 13 |
| Negative electrode binder ratio (parts) | 1 | 1 | 1 | 1 | 1 | 1 | 1 | 1 | 1 |
| Positive electrode active material | Fe | Fe | Ni | Mn | Fe | Fe | Fe | Fe | |
| Positive electrode acrylonitrile ratio | 20 | 20 | 20 | 20 | 20 | 20 | 12 | 20 | 20 |
| Positive electrode methacrylic acid ratio | 2 | 2 | 2 | 2 | 2 | 2 | 2 | 2 | 2 |
| Positive electrode 2-ethylhexyl acrvlate ratio | 78 | 78 | 78 | 78 | 78 | 78 | 86 | 78 | 78 |
| Swelling degree (times) | 4.5 | 4.5 | 4.5 | 4.5 | 4.5 | 4.5 | 2.1 | 4.5 | 4.5 |
| Positive electrode binder ratio (parts) | 1 | 1 | 1 | 1 | 1 | 1 | 1 | 1 | 1 |
| Preservative ratio (parts) | 0.005 | 0.002 | 0.005 | 0.005 | 0.005 | 0.005 | 0.005 | 0.005 | 0.005 |
| Existence of separator microporous film | Yes | Yes | Yes | Yes | Yes | Yes | Yes | Yes | No |
| Existence of electroconductive adhesive layer (positive electrode) | Yes | Yes | Yes | Yes | Yes | Yes | Yes | No | Yes |
| Capacity keeping ratio (%) | 82.5 | 65.9 | 68.5 | 67.4 | 76.5 | 81.4 | 74.1 | 61.1 | 58.5 |
| Capacity ratio (%) | 73.1 | 62.4 | 62.5 | 60.8 | 71.2 | 70.3 | 65.7 | 57.5 | 57 |
| Short circuit occurrence rate | 9.1 | 15.5 | 13.6 | 15 | 11.4 | 10.6 | 12 | 17.1 | 18.5 |

**Table 2**

| | Ex.10 | Ex.11 | Ex.12 | Ex.13 | Ex.14 | Ex.15 | Ex.16 | Ex.17 | Ex.18 |
|---|---|---|---|---|---|---|---|---|---|
| Carbonaceous material (parts) | 100 | 100 | 100 | 100 | 100 | 100 | 100 | 100 | 100 |
| Distance between graphite layers (nm) | 0.361 | 0.354 | 0.361 | 0.354 | 0.354 | 0.354 | 0.354 | 0.354 | 0.354 |
| Negative electrode styrene monomer ratio | 85 | 85 | 85 | 85 | 85 | 85 | 85 | 85 | 85 |
| Negative electrode methacrylic acid ratio | 2 | 2 | 2 | 4 | 2 | 2 | 2 | 2 | 2 |
| Negative electrode 1,3-butadiene ratio | 13 | 13 | 13 | 11 | 13 | 13 | 13 | 13 | 13 |
| Negative electrode binder ratio (parts) | 1 | 1 | 1 | 1 | 0.7 | 2 | 1 | 1 | 1 |
| Positive electrode active material | Fe | Fe | Fe | Fe | Fe | Fe | Fe | Fe | Fe |
| Positive electrode acrylonitrile ratio | 20 | 25 | 30 | 20 | 20 | 20 | 20 | 20 | 20 |
| Positive electrode methacrylic acid ratio | 2 | 2 | 2 | 2 | 2 | 2 | 4 | 2 | 2 |
| Positive electrode 2-ethylhexyl acrylate ratio | 78 | 73 | 68 | 78 | 78 | 78 | 76 | 78 | 78 |
| Swelling degree (times) | 4.5 | 9.0 | 13.0 | 4.5 | 4.5 | 4.5 | 5.8 | 4.5 | 4.5 |
| Positive electrode binder ratio (parts) | 1 | 1 | 1 | 1 | 1 | 1 | 1 | 0.7 | 4 |
| Preservative ratio (parts) | 0.005 | 0.005 | 0.005 | 0.005 | 0.005 | 0.005 | 0.005 | 0.005 | 0.005 |
| Existence of separator microporous film | Yes | Yes | Yes | Yes | Yes | Yes | Yes | Yes | Yes |
| Existence of electroconductive adhesive layer (positive electrode) | Yes | Yes | Yes | Yes | Yes | Yes | Yes | Yes | Yes |
| Capacity keeping ratio (%) | 67.8 | 65.5 | 62.5 | 81.1 | 83.8 | 80.8 | 78.5 | 80.4 | 75.6 |
| Capacity ratio (%) | 61.1 | 60.1 | 58.8 | 70.9 | 74.6 | 71.5 | 69.9 | 72.6 | 65.8 |
| Short circuit occurrence rate (%) | 14 | 15 | 18 | 11.6 | 10.5 | 7.5 | 11 | 12.6 | 10.7 |

**Table 3**

| | Comp. Ex.1 | Comp. Ex.2 | Comp. Ex.3 | Comp. Ex.4 | Comp. Ex.5 | Comp. Ex.6 | Comp. Ex.7 |
|---|---|---|---|---|---|---|---|
| Carbonaceous material (parts) | 100 | 100 | 100 | 100 | 100 | 100 | 100 |
| Distance between graphite layers (nm) | 0.354 | 0.354 | 0.354 | 0.354 | 0.354 | 0.354 | 0.354 |
| Negative electrode styrene monomer ratio | 65 | 95 | 85 | 85 | 85 | 85 | 85 |
| Negative electrode methacrylic acid ratio | 7 | 0.05 | 2 | 2 | 2 | 0.5 | 0.5 |
| Negative electrode 1,3-butadiene ratio | 28 | 4.95 | 13 | 13 | 13 | 14.5 | 14.5 |
| Negative electrode binder ratio (parts) | 1 | 1 | 1 | 1 | 1 | 1 | 1 |
| Positive electrode active material | Fe | Fe | Co | Fe | Fe | Fe | Fe |
| Positive electrode acrylonitrile ratio | 20 | 20 | 20 | 5 | 40 | 20 | 20 |
| Positive electrode methacrylic acid ratio | 2 | 2 | 2 | 2 | 2 | 0.5 | 0.5 |
| Positive electrode 2-ethylhexyl acrvlate ratio | 78 | 78 | 78 | 93 | 58 | 79.5 | 79.5 |
| Swelling degree (times) | 4.5 | 4.5 | 4.5 | 1.5 | 16.8 | 1.5 | 1.5 |
| Positive electrode binder ratio (parts) | 1 | 1 | 1 | 1 | 1 | 1 | 1 |
| Preservative ratio (parts) | 0.005 | 0.005 | 0.005 | 0.005 | 0.005 | 0.005 | 0 |
| Existence of separator microporous film | Yes | Yes | Yes | Yes | Yes | Yes | Yes |
| Existence of electroconductive adhesive layer (positive electrode) | Yes | Yes | Yes | Yes | Yes | Yes | Yes |
| Capacity keeping ratio (%) | 55.5 | 58.5 | 28.3 | 50.3 | 56.1 | 45.6 | 44.1 |
| Capacity ratio (%) | 43.6 | 48.3 | 38.5 | 40.2 | 47.5 | 40.5 | 35.1 |
| Short circuit occurrence rate (%) | 29.5 | 25.1 | 22.3 | 20.5 | 24.4 | 26.5 | 31.5 |

In the tables, the positive electrode active material was represented by metal elements, and "Fe", "Ni", "Mn", and "Co" represent LiFePO₄, LiNiO₂, LiMnO₂, and LiCoO₂, respectively.

The monomer ratio in the tables all represents part(s) by weight.

As seen from the results in Tables 1 and 2, the lithium ion secondary batteries of Examples of the present application exhibit excellent performance in the capacity keeping rate, the capacity ratio, and the rate of occurrence of short circuit as compared with the lithium ion secondary batteries of Comparative Examples in which the compositions of the positive electrode active material layer or the negative electrode active material layer are out of the range defined by the present invention.

## Claims

1. A lithium ion secondary battery comprising: a negative electrode having a negative electrode active material layer containing a negative electrode active material and a negative electrode binder; a positive electrode having a positive electrode active material layer containing a positive electrode active material and a positive electrode binder; an electrolyte solution; and a separator, wherein:
the negative electrode active material includes a carbonaceous active material;
the negative electrode binder is a polymer obtained by polymerization of a monomer composition for a negative electrode, the monomer composition for a negative electrode containing 70 to 90 parts by weight of a styrene monomer and 1 to 5 parts by weight of an ethylenically unsaturated carboxylic acid monomer relative to 100 parts by weight of the monomer composition;
in the negative electrode active material layer, a ratio of the negative electrode binder is 0.1 to 5 parts by weight relative to 100 parts by weight of the negative electrode active material;
the positive electrode active material contains one or more species of transition metal elements selected from the group consisting of manganese, iron, nickel, and combinations thereof;
in the positive electrode active material layer, a ratio of the positive electrode binder is 0.1 to 5 parts by weight relative to 100 parts by weight of the positive electrode active material;
the positive electrode binder is a polymer obtained by polymerization of a monomer composition for a positive electrode, the monomer composition for a positive electrode containing 10 to 35 parts by weight of an acrylonitrile monomer and 1 to 10 parts by weight of an ethylenically unsaturated carboxylic acid monomer relative to 100 parts by weight of the monomer composition; and
the positive electrode binder is a polymer having a swelling degree against the electrolyte solution of 2.0 to 15.0 times.

2. The lithium ion secondary battery according to claim 1, wherein: the negative electrode binder is a polymer obtained by polymerization in an aqueous medium;
the negative electrode active material layer contains a preservative in a ratio of 0.001 to 0.1 parts by weight relative to 100 parts by weight of the monomer composition;
the positive electrode binder is a polymer obtained by polymerization in an aqueous medium; and
the positive electrode active material layer contains a preservative in a ratio of 0.001 to 0.1 parts by weight relative to 100 parts by weight of the monomer composition.

3. The lithium ion secondary battery according to claim 1, wherein the separator has a porous film containing non-electroconductive particles.

4. The lithium ion secondary battery according to claim 1, wherein the monomer composition for a negative electrode is a composition further containing a conjugate diene monomer in a ratio of 0.1 to 25 parts by weight relative to 100 parts by weight of the monomer composition.

5. The lithium ion secondary battery according to claim 1, wherein the carbonaceous active material of the negative electrode contains a carbon material having a distance between graphite layers of 0.340 to 0.370 nm.

6. The lithium ion secondary battery according to claim 1, wherein the positive electrode active material is olivine iron.

7. The lithium ion secondary battery according to claim 1, wherein the negative electrode, the positive electrode, or both electrodes have a collector and an electroconductive adhesive layer which is interposed between the negative electrode active material layer and the collector, between the positive electrode active material layer and the collector, or both of them.

8. The lithium ion secondary battery according to claim 1, wherein the battery has a multilayer structure.

## Patentansprüche

1. Ein Lithium-Ionen-Akkumulator, umfassend: eine negative Elektrode mit einer Aktivmaterialschicht für eine negative Elektrode, welche ein Aktivmaterial für eine negative Elektrode und ein Bindemittel für eine negative Elektrode enthält; eine positive Elektrode mit einer Aktivmaterialschicht für eine positive Elektrode, welche ein Aktivmaterial für eine positive Elektrode und ein Bindemittel für eine positive Elektrode enthält; eine Elektrolytlösung; und einen Separator, wobei:
das Aktivmaterial für eine negative Elektrode ein kohlenstoffhaltiges Aktivmaterial beinhaltet;
das Bindemittel für eine negative Elektrode ein Polymer, erhalten durch Polymerisation einer Monomerzusammensetzung für eine negative Elektrode, ist, wobei die Monomerzusammensetzung für eine negative Elektrode 70 bis 90 Gewichtsteile eines Styrolmonomers und 1 bis 5 Gewichtsteile eines ethylenisch ungesättigten Carbonsäuremonomers, bezogen auf 100 Gewichtsteile der Monomerzusammensetzung, enthält;
in der Aktivmaterialschicht für eine negative Elektrode, ein Verhältnis des Bindemittels für eine negative Elektrode 0,1 bis 5 Gewichtsteile, bezogen auf 100 Gewichtsteile des Aktivmaterials für eine negative Elektrode, beträgt;
das Aktivmaterial für eine positive Elektrode eine oder mehr Spezies von Übergangsmetallelementen, ausgewählt aus der Gruppe bestehend aus Mangan, Eisen, Nickel und Kombinationen davon, enthält;
in der Aktivmaterialschicht für eine positive Elektrode, ein Verhältnis des Bindemittels für eine positive Elektrode 0,1 bis 5 Gewichtsteile, bezogen auf 100 Gewichtsteile des Aktivmaterials für eine positive Elektrode, beträgt;
das Bindemittel für eine positive Elektrode ein Polymer, erhalten durch Polymerisation einer Monomerzusammensetzung für eine positive Elektrode, ist, wobei die Monomerzusammensetzung für eine positive Elektrode 10 bis 35 Gewichtsteile eines Acrylnitrilmonomers und 1 bis 10 Gewichtsteile eines ethylenisch ungesättigten Carbonsäuremonomers, bezogen auf 100 Gewichtsteile der Monomerzusammensetzung, enthält; und
das Bindemittel für eine positive Elektrode ein Polymer mit einem 2,0- bis 15,0-fachen Quellgrad gegenüber der Elektrolytlösung ist.

2. Der Lithium-Ionen-Akkumulator gemäß Anspruch 1, wobei: das Bindemittel für eine negative Elektrode ein Polymer, erhalten durch Polymerisation in einem wässrigen Medium, ist;
die Aktivmaterialschicht für eine negative Elektrode ein Konservierungsmittel in einem Verhältnis von 0,001 bis 0,1 Gewichtsteile, bezogen auf 100 Gewichtsteile der Monomerzusammensetzung, enthält;
das Bindemittel für eine positive Elektrode ein Polymer, erhalten durch Polymerisation in einem wässrigen Medium, ist; und
die Aktivmaterialschicht für eine positive Elektrode ein Konservierungsmittel in einem Verhältnis von 0,001 bis 0,1 Gewichtsteile, bezogen auf 100 Gewichtsteile der Monomerzusammensetzung, enthält.

3. Der Lithium-Ionen-Akkumulator gemäß Anspruch 1, wobei der Separator einen porösen Film, welcher elektrisch nicht leitfähige Teilchen enthält, aufweist.

4. Der Lithium-Ionen-Akkumulator gemäß Anspruch 1, wobei die Monomerzusammensetzung für eine negative Elektrode eine Zusammensetzung ist, ferner enthaltend ein konjugiertes Dienmonomer in einem Verhältnis von 0,1 bis 25 Gewichtsteilen, bezogen auf 100 Gewichtsteile der Monomerzusammensetzung.

5. Der Lithium-Ionen-Akkumulator gemäß Anspruch 1, wobei das kohlenstoffhaltige Aktivmaterial für eine negative Elektrode ein Kohlenstoffmaterial, welches zwischen den Graphitschichten einen Abstand von 0,340 bis 0,370 nm aufweist, enthält.

6. Der Lithium-Ionen-Akkumulator gemäß Anspruch 1, wobei das Aktivmaterial für eine positive Elektrode Olivineisen ist.

7. Der Lithium-Ionen-Akkumulator gemäß Anspruch 1, wobei die negative Elektrode, die positive Elektrode oder beide Elektroden einen Kollektor und eine elektrische leitfähige Haftschicht, welche sich zwischen der Aktivmaterialschicht für eine negative Elektrode und dem Kollektor, zwischen der Aktivmaterialschicht für eine positive Elektrode und dem Kollektor oder beidem befindet, aufweisen.

8. Der Lithium-Ionen-Akkumulator gemäß Anspruch 1, wobei der Akkumulator eine mehrschichtige Struktur aufweist.

## Revendications

1. Batterie rechargeable au lithium-ion, comprenant :
une électrode négative ayant une couche de matériau actif d'électrode négative contenant un matériau actif d'électrode négative et un liant d'électrode négative ; une électrode positive ayant une couche de matériau actif d'électrode positive contenant un matériau actif d'électrode positive et un liant d'électrode positive ; une solution d'électrolyte ; et un séparateur, dans laquelle :
le matériau actif d'électrode négative comprend un matériau actif carboné ;
le liant d'électrode négative est un polymère obtenu par polymérisation d'une composition monomérique destinée à une électrode négative, la composition monomérique destinée à une électrode négative contenant 70 à 90 parties en poids d'un monomère de styrène et 1 à 5 parties en poids d'un monomère d'acide carboxylique insaturé éthyléniquement par rapport à 100 parties en poids de la composition monomérique ;
dans la couche de matériau actif d'électrode négative, un rapport du liant d'électrode négative est de 0,1 à 5 parties en poids pour 100 parties en poids du matériau actif d'électrode négative ;
le matériau actif d'électrode positive contient une ou plusieurs espèces d'éléments de métaux de transition choisies dans le groupe constitué du manganèse, du fer, du nickel, et des combinaisons de ceux-ci ;
dans la couche de matériau actif d'électrode positive, un rapport du liant d'électrode positive est de 0,1 à 5 parties en poids pour 100 parties en poids du matériau actif d'électrode positive ;
le liant d'électrode positive est un polymère obtenu par polymérisation d'une composition monomérique destinée à une électrode positive, la composition monomérique destinée à une électrode positive contenant 10 à 35 parties en poids d'un monomère d'acrylonitrile, et 1 à 10 parties en poids d'un monomère d'acide carboxylique insaturé éthyléniquement par rapport à 100 parties en poids de la composition monomérique ; et
le liant d'électrode positive est un polymère ayant un degré de gonflement vis-à-vis de la solution électrolytique de 2,0 à 15,0 fois.

2. Batterie rechargeable au lithium-ion selon la revendication 1, dans laquelle : le liant d'électrode négative est un polymère obtenu par polymérisation dans un milieu aqueux ;
la couche de matériau actif d'électrode négative contient un conservateur en un rapport de 0,001 à 0,1 partie en poids pour 100 parties en poids de la composition monomérique ;
le liant d'électrode positive est un polymère obtenu par polymérisation dans un milieu aqueux ; et
la couche de matériau actif d'électrode positive contient un conservateur en un rapport de 0,001 à 0,1 partie en poids pour 100 parties en poids de la composition monomérique.

3. Batterie rechargeable au lithium-ion selon la revendication 1, dans laquelle le séparateur possède un film poreux contenant des particules non électroconductrices.

4. Batterie rechargeable au lithium-ion selon la revendication 1, dans laquelle la composition monomérique destinée à une électrode négative est une composition contenant en outre un monomère de diène conjugué en un rapport de 0,1 à 25 parties en poids pour 100 parties en poids de la composition monomérique.

5. Batterie rechargeable au lithium-ion selon la revendication 1, dans laquelle le matériau actif carboné de l'électrode négative contient un matériau carboné ayant une distance entre les couches de graphite de 0,340 à 0,370 nm.

6. Batterie rechargeable au lithium-ion selon la revendication 1, dans laquelle le matériau actif d'électrode positive est le fer d'olivine.

7. Batterie rechargeable au lithium-ion selon la revendication 1, dans laquelle l'électrode négative, l'électrode positive ou les deux électrodes possèdent un collecteur et une couche adhésive électroconductrice qui est intercalée entre la couche de matériau actif d'électrode négative et le collecteur, entre la couche de matériau actif d'électrode positive et le collecteur, ou les deux.

8. Batterie rechargeable au lithium-ion selon la revendication 1, dans laquelle la batterie possède une structure multicouches.
